# EUROPÄISCHE PATENTANMELDUNG

(11) **EP 2 457 973 A1**
(43) Veröffentlichungstag der Anmeldung: **30.05.2012**
(21) Anmeldenummer: 10192387.8
(22) Anmeldetag: 24.11.2010
(51) Int. Cl.: C09K 8/035, C09K 8/40, C09K 8/588, C09K 8/60, C09K 8/68, C08F 20/28, C08F 20/56

(54) **VERWENDUNG EINES WASSERLÖSLICHEN, HYDROPHOB ASSOZIIERENDEN COPOLYMERS ALS ADDITIV IN SPEZIELLEN ÖLFELDANWENDUNGEN**

(71) Anmelder: BASF SE, 67056 Ludwigshafen (DE)
(72) Erfinder: Reichenbach-Klinke, Roland, 83278, Traunstein (DE); Lafuente Cerda, Oscar, 85560, Ebersberg (DE); Assmann, Andrea, 83567, Unterreit (DE); Langlotz, Björn, 83308, Trostberg (DE)
(74) Vertreter: Witz, Michael

(57) **Zusammenfassung**

Vorgeschlagen wird die Verwendung eines wasserlöslichen, hydrophob assoziierenden Copolymers als Additiv bei der Erschließung, Ausbeutung und Komplettierung unterirdischer Erdöl- und Erdgaslagerstätten, umfassend (a) mindestens ein monoethylenisch ungesättigtes, wasserlösliches, oberflächenaktives Monomer (a), sowie (b) mindestens ein von Monomer (a) verschiedenes, monoethylenisch ungesättigtes, hydrophiles Monomer (b), dadurch gekennzeichnet, dass bei der Synthese des Copolymers vor der Initiierung der Polymerisationsreaktion vorteilhaft als weitere Komponente (c) mindestens eine weitere, aber nicht-polymerisierbare oberflächenaktive Verbindung eingesetzt wurde.

## Beschreibung

Die vorliegende Erfindung betrifft die Verwendung eines wasserlöslichen, hydrophob assoziierenden Copolymers als Additiv bei der Erschließung, Ausbeutung und Komplettierung unterirdischer Erdöl- und Erdgaslagerstätten.

Ein Copolymer der eingangs genannten Art ist in unserer älteren, noch nicht veröffentlichten Internationalen Patentanmeldung PCT/EP2010/06107 mit Priorität vom 06.08.2009 beschrieben. Es handelt sich dort um ein wasserlösliches, hydrophob assoziierendes Copolymer, das in Gegenwart einer nicht-polymerisierbaren oberflächenaktiven Verbindung erhalten wird, sowie um Verfahren zu seiner Herstellung und um seine Verwendungen. Allerdings wurden die in der hier vorliegenden Anmeldung beschriebenen und beanspruchten speziellen Anwendungen in der besagten älteren Internationalen Patentanmeldung noch nicht klar erkannt und beschrieben.

Wasserlösliche, verdickend wirkende Polymere werden in vielen Bereichen der Technik eingesetzt, beispielsweise im Bereich der Kosmetik, in Lebensmitteln, zur Herstellung von Reinigungsmitteln, Druckfarben, Dispersionsfarben, insbesondere aber auch bei der Erdölförderung.

Es sind viele chemisch unterschiedliche Klassen von Polymeren bekannt, welche als Verdicker eingesetzt werden können. Eine wichtige Klasse verdickend wirkender Polymere sind die sogenannten hydrophob assoziierenden Polymere. Hierunter versteht der Fachmann wasserlösliche Polymere, welche seiten- oder endständig hydrophobe Gruppen aufweisen, wie beispielsweise längere Alkylketten. In wässriger Lösung können derartige hydrophobe Gruppen mit sich selbst oder mit anderen hydrophobe Gruppen aufweisenden Stoffen assoziieren. Hierdurch wird ein assoziatives Netzwerk gebildet, durch das das Medium verdickt wird.

Ein wichtiges Anwendungsgebiet dieser hydrophob assoziierende Copolymere findet sich im Bereich der Erdölförderung, insbesondere der tertiären Erdölförderung (Enhanced Oil Recovery, EOR). Einzelheiten zur Verwendung hydrophob assoziierender Copolymere zur tertiären Erdölförderung sind beispielsweise im Übersichtsartikel von Taylor, K.C. und Nasr-EI-Din, H.A. in J. Petr. Sci. Eng. 1998, 19, 265-280 beschrieben.

Zu den Techniken der tertiären Erdölförderung gehört auch das sogenannte "Polymerfluten". Eine Erdöllagerstätte ist kein unterirdischer "Erdölsee", sondern das Erdöl ist in winzigen Poren des Erdöl führenden Gesteins festgehalten. Der Durchmesser der Hohlräume in der Formation beträgt üblicherweise nur wenige Mikrometer. Zum Polymerfluten presst man durch Injektionsbohrungen eine wässrige Lösung eines verdickend wirkenden Polymers in eine Erdöllagerstätte ein. Durch das Einpressen der Polymerlösung wird das Erdöl durch die besagten Hohlräume in der Formation von der Injektionsbohrung ausgehend in Richtung der Produktionsbohrung gedrückt, und das Erdöl wird über die Produktionsbohrung gefördert.

Der Einsatz einer wässrigen Polymerlösung gegenüber von reinem Wasser verhindert, dass sich beim Fluten der unterirdischen Formation unterschiedlich permeablen Kanäle bilden (sog. "Fingering"), wodurch die übrigen unterirdischen Bereiche nicht geflutet würden. Der Zusatz des Polymers zur wässrigen Phase verringert deren Mobilität und führt dadurch zu einem gleichmäßigeren Flutprozess.

Eine weitere Technik bei der Erdölförderung ist das sogenannte "Hydraulic Fracturing". Beim "Hydraulic Fracturing" wird beispielsweise eine hochviskose, wässrige Lösung unter hohem Druck in die Öl oder Gas führende Formationsschicht eingepresst. Durch den hohen Druck entstehen Risse im Gestein, welche die Förderung von Öl oder Gas erleichtern. Als Verdicker werden hier vor allem Guar und dessen temperaturstabilere Derivate wie beispielsweise Hydroxypropylguar oder Carboxymethylhydroxypropylguar eingesetzt (J. K. Fink, Oil Field Chemicals, Elsevier 2003, S. 240 ff). Diese Biopolymere weisen allerdings, wie generell die meisten Polymere, eine deutliche Abnahme der Viskosität mit steigender Temperatur auf. Da aber in den unterirdischen Formationen erhöhte Temperaturen vorherrschen, wäre es vorteilhaft für die Anwendung im "Hydraulic Fracturing" Verdicker einzusetzen, deren Viskosität mit steigender Temperatur nicht abnimmt oder sogar noch ansteigt.

Weitere Anwendungsgebiete von hydrophob assoziierenden Copolymeren im Bereich der Erdölförderung ist das Verdicken von Bohrspülungen und Komplettierungsflüssigkeiten. Beispielsweise beschreiben Ezell et al. (Vortrag AADE-10-DF-HO-01 auf der AADE Fluids Conference and Exhibition , Huston, TX, USA, 6.-7. April 2010) den Einsatz von Assoziativverdickern in Komplettierungsflüssigkeiten. Des Weiteren beschreibt Taylor in seinem Review-Artikel (Ann. Transactions of the Nordic Rheology Society, Vol. 11, 2003) die Anwendung von hydrophob assoziierenden Polymeren in Bohrspülungen und Komplettierungsflüssigkeiten. Es wird beschrieben, dass die Viskosität dieser Copolymere mit steigender Temperatur abnimmt.

Geschäumte Flüssigkeiten werden beim "Hydraulic Fracturing" angewendet, und zwar sowohl als Träger von "Proppants" (Stützkörper) als auch als "Diverting Agents" (Umleitungsflüssigkeiten) (Burman et al., 1986, DOI: 10.2118/15575-MS; Parlar et al., 1995, DOI: 10.2118/29678-MS). Der Schaum soll während der ganzen Behandlung stabil bleiben. Verschiedene Faktoren beinflussen die Stabilität des Schaums, unter anderem die Viskosität, die chemische Zusammensetzung der Schaumbildner, die Formationstemperatur und die Gasphase.

Zu beachten ist außerdem, dass die wässrige Polymerlösung keinerlei Gelpartikel enthält. Bereits kleine Gelpartikel mit Dimensionen im Mikrometerbereich können nämlich die feinen Poren in der Formation verstopfen und somit die Erdölförderung zum Erliegen bringen. Hydrophob assoziierende Copolymere zur Erdölförderung sollten daher einen möglichst geringen Anteil an Gelpartikeln aufweisen. Das Ziel besteht darin, durch die Polymere eine Erhöhung der Viskosität des Wassers zu erreichen, welche idealerweise der Viskosität der zu fördernden Kohlenwasserstoffe entspricht.

Hydrophob assoziierende, wasserlösliche Copolymere werden häufig durch die sogenannte mizellare Copolymerisation hergestellt. Dabei werden wasserunlösliche Comonomere durch den Zusatz von Tensiden im wässrigen Reaktionsmedium solvatisiert und mit hydrophilen Comonomeren wie beispielsweise Acrylamid zu einem wasserlöslichen, hydrophob assoziierenden Copolymer umgesetzt. So beschreibt beispielsweise Macromol. Chem. Phys. 2001, 202, 1384-1397 die mizellare Copolymerisation der wasserlöslichen Comonomere Acrylamid, AMPS^{®} (Acrylamidomethylpropansulfonsäure) und MADQUAT ([2-(Methacryloyloxy)ethyl]-trimethylammoniumchlorid) mit Dihexylacrylamid bzw. *N*-(4-Ethyl-phenyl)-acrylamid, während Polymer 1998, 39 (5), 1025-1033 die Copolymerisation von Acrylamid mit Dihexylacrylamid und Eur. Polym. J. 2007, 43, 824-834 die Copolymerisation von Acrylamid mit N-Octadecylacrylamid diskutiert. Als Tensid wird in beiden Fällen Natriumdodecylsulfonat (SDS) verwendet. Ein weiteres Beispiel für eine mizellare Copolymerisation liefert J. Colloid Interf. Sci. 2009, 333, 152-163. Hier wird Acrylamid mit einem Polypropylenglykolmethacrylat in Gegenwart von SDS umgesetzt.

Des Weiteren beschreibt WO 85/03510 wasserlösliche, hydrophob assoziierende Copolymere eines ethylenisch ungesättigten wasserlöslichen Monomers und eines ethylenisch ungesättigten amphiphilen Monomers mit hydrophoben Gruppen. Erhalten werden diese Copolymere durch Umsetzung von wasserlöslichen Monomeren wie beispielsweise Acrylamid und amphiphilen Monomeren wie beispielsweise Dodecyl-polyoxyethylen(10)-methacrylat. Die amphiphilen Comonomere werden als wasserlöslich bei Raumtemperatur, aber wasserunlöslich bei erhöhter Temperatur bzw. der bei der Herstellung der Copolymere verwendeten Temperatur von beispielsweise 60°C charakterisiert. Daher wird auch hier bei Bedarf, d.h. wenn die Polymerisation bei erhöhter Temperatur erfolgt, ein Tensid bzw. Emulgator zugesetzt, um die Löslichkeit des amphiphilen Comonomers unter den Polymerisationsbedingungen sicherzustellen. Allerdings handelt es sich dann beim Monomer nicht mehr um eine wasserlösliche Variante.

Eine weitere Methode zur Herstellung von wasserlöslichen, hydrophob assoziierenden Copolymeren ist die Verwendung von oberflächenaktiven, wasserlöslichen Comonomeren. Diese Comonomere besitzen einen hydrophoben Anteil, der im Copolymer den hydrophob assoziierenden Effekt bewirkt, und einen hydrophilen Anteil, welcher die Wasserlöslichkeit des Comonomeren sicher stellt. Vorteil dieses Verfahrens ist, dass kein zusätzliches Tensid zur Solvatation des hydrophob assoziierenden Monomeren notwendig ist.

Beispiele für die Anwendung dieses Verfahrens sind in EP 705 854 A1, DE 100 37 629 A1 und DE 10 2004 032 304 A1 zu finden. Diese Schriften offenbaren wasserlösliche, hydrophob assoziierende Copolymere und deren Verwendung, beispielsweise im Bereich der Bauchemie. Als hydrophob assoziierende Monomere enthalten die offenbarten Copolymere jeweils Monomere des nachfolgenden Typs: H₂C=C(R^{x})-COO-(-CH₂-CH₂-O-)_{q}-R^{y} oder auch H₂C=C(R^{x})-O-(-CH₂-CH₂-O-)_{q}-R^{y} wobei R^{x} typischerweise für H oder CH₃ und R^{y} für einen größeren Kohlenwasserstoffrest steht, typischerweise für Kohlenwasserstoffreste mit 8 bis 40 Kohlenstoffatomen. In den Schriften genannt sind beispielsweise längere Alkylgruppen oder auch eine Tristyrylphenylgruppe.

Weiterhin diskutiert J. Appl. Polym. Sci. 1999, 74, 211-217 den Einsatz eines kationischen, wasserlöslichen, hydrophob assoziierenden Comonomeren, welches durch Umsetzung von 2-Methacryloyloxyethyl-dimethylamin mit 1-Bromdodecan erhalten wurde.

Die kanadische Patentschrift 2,196,908 befasst sich mit assoziierenden Monomeren und Polymeren. Im Vordergrund dieses Dokuments stehen im Wesentlichen Emulsionspolymere aus Methacrylsäure, Ethylacrylat und einem Monomer, welches durch Umsetzung von Dimethyl-m-isoprenyl-benzylisocyanat (DMI) und IEM bzw. Polybutylenoxid bzw. Polybutylenoxid-co-polyethylenoxid erhalten wurde. Dabei werden vor allem nicht wasserlösliche und nicht hydrophile Monomere, wie bspw. Ethylacrylat, eingesetzt.

Generell lässt sich feststellen, dass die bekannten hydrophob assoziierenden Copolymere bei der Verwendung als Verdicker im Bereich der Erdölförderung den Nachteil aufweisen, dass die Viskosität bei steigender Temperatur abnimmt. Da die Anwendung dieser Polymere bei der Erdölförderung meist bei erhöhter Temperatur stattfindet, ist dies ein besonders gravierender Nachteil.

Ein weiterer Nachteil der vorstehend beschriebenen und kommerziell verfügbaren hydrophobassoziativen Polymere ist deren hoher Gelanteil, der sich bei der Auflösung bildet und poröse Formationen verstopfen kann. Dieses Problem wurde bereits mit Copolymeren gemäß unserer älteren, noch nicht veröffentlichten Internationalen Patentanmeldung PCT/EP2010/056685 mit Priorität vom 20.05.2009 teilweise gelöst. Die Gelanteile konnten dort zwar merklich reduziert, aber noch nicht ganz vermieden werden. Es bestand weiterhin Bedarf an hydrophob-assoziativen Polymeren mit verbesserten Eigenschaften gegenüber den bereits bekannten hydrophob assoziierenden Copolymeren. Unsere eingangs erwähnte ältere, noch nicht veröffentlichte Internationale Patentanmeldung PCT/EP2010/06107 stellt ein hydrophob assoziierendes Copolymer mit geringen oder nicht nachweisbarem Gelanteil bereit.

Die Aufgabe der hier vorliegenden Erfindung war es nun, zu untersuchen, ob sich dieses Copolymer als Additiv bei der Erschließung, Ausbeutung und Komplettierung unterirdischer Erdöl- und Erdgaslagerstätten z.B. beim "Hydraulic Fracturing", als Verdicker bzw. Stabilisator von Schäumen, sowie als Verdicker von Komplettierungsflüssigkeiten, Abstandshalterflüssigkeiten ("Spacerflüssigkeiten") und Bohrspülungen unter den in unterirdischen Formationen üblichen Bedingungen eignet. Diese Aufgabe wird mit den Merkmalen des unabhängigen Anspruchs gelöst. Die abhängigen Ansprüche beziehen sich auf bevorzugte Ausführungsformen.

Es wurde überraschend gefunden, dass das in unserer älteren Internationalen Patentanmeldung PCT/EP2010/06107 beschriebene Copolymer ein vorteilhaftes Viskositätsprofil aufweist und sich besonders gut z.B. als Verdicker für Komplettierungsflüssigkeiten, Abstandshalterflüssigkeiten und Bohrspülungen, das "Hydraulic Fracturing" und Schäume eignet, da sich die Viskosität dieses Copolymers mit steigender Temperatur bis zu einem Maximum bei ca. 60 °C erhöht.

Gegenstand der vorliegenden Erfindung ist die Verwendung eines wasserlöslichen, hydrophob assoziierenden Copolymers als Additiv bei der Erschließung, Ausbeutung und Komplettierung unterirdischer Erdöl- und Erdgaslagerstätten, umfassend (a) mindestens ein monoethylenisch ungesättigtes, wasserlösliches, oberflächenaktives Monomer (a), sowie (b) mindestens ein von Monomer (a) verschiedenes, monoethylenisch ungesättigtes, hydrophiles Monomer (b), dadurch gekennzeichnet, dass bei der Synthese des Copolymers vor der Initiierung der Polymerisationsreaktion vorteilhaft als weitere Komponente (c) mindestens eine weitere, aber nicht-polymerisierbare oberflächenaktive Verbindung eingesetzt wurde.

Wie oben bereits erwähnt wurde, wird ein Vorteil der aus dem Stand der Technik bekannten Verfahren darin gesehen, dass sich die hydrophob assoziierenden Copolymere ohne den Zusatz eines Tensids herstellen lassen, da alle dort verwendeten Comonomere wasserlöslich sind. Daher war es umso überraschender, dass beim Copolymer gemäß PCT/EP2010/06107 durch den Zusatz eines Tensids während der wässrigen Lösungspolymerisation von hydrophilen Monomeren mit einem wasserlöslichen, hydrophob assoziierenden Comonomer eine deutliche Verbesserung der Polymereigenschaften, insbesondere der Verdickungswirkung erreicht und außerdem der Gelanteil signifikant reduziert werden konnte. Dieser Effekt lässt sich vermutlich folgendermaßen erklären:
Bei der bekannten Verfahrensweise bildet das oberflächenaktive, hydrophob assoziierende Comonomer in dem wässrigen Reaktionsmedium Mizellen. Bei der Polymerisation führt dies dazu, dass die hydrophob assoziierenden Bereiche blockweise in das Polymer eingebaut werden. Ist nun bei der Herstellung des Copolymers eine zusätzliche oberflächenaktive Verbindung anwesend, bilden sich gemischte Mizellen. Diese gemischten Mizellen enthalten polymerisierbare und nicht polymerisierbare Anteile. Dadurch werden dann die hydrophob assoziierenden Monomere in kürzeren Blöcken eingebaut. Gleichzeitig ist die Anzahl dieser kürzeren Blöcke pro Polymerkette größer. Somit unterscheidet sich die Polymerkonstitution des Copolymers gemäß PCT/EP2010/06107 deutlich von den Copolymeren nach dem Stand der Technik, wodurch sich auch deren anwendungstechnische Eigenschaften signifikant verbessern.

Bei den erfindungsgemäßen hydrophob assoziierenden Copolymeren handelt es sich um wasserlösliche Copolymere, welche hydrophobe Gruppen aufweisen. In wässriger Lösung können die hydrophoben Gruppen mit sich selbst oder mit anderen hydrophobe Gruppen aufweisenden Stoffen assoziieren und verdicken durch diese Wechselwirkung das wässrige Medium.

Dem Fachmann ist bekannt, dass die Löslichkeit hydrophob assoziierender (Co)polymere in Wasser je nach der Art der verwendeten Monomere mehr oder weniger stark vom pH-Wert abhängig sein kann. Bezugspunkt für die Beurteilung der Wasserlöslichkeit soll daher jeweils der für den jeweiligen Einsatzzweck des Copolymers gewünschte pH-Wert sein. Ein Copolymer, welches bei einem bestimmten pH-Wert eine nicht ausreichende Löslichkeit für den vorgesehenen Einsatzzweck hat, kann bei einem anderen pH-Wert eine ausreichende Löslichkeit aufweisen. Der Begriff "wasserlöslich" umfasst insbesondere auch alkalilösliche Dispersionen von Polymeren, d.h. Polymere, welche im sauren pH-Bereich als Dispersionen vorliegen und sich erst im alkalischen pH-Bereich in Wasser lösen und ihre verdickende Wirkung entfalten.

Im Idealfalle sollten die erfindungsgemäßen Copolymere in beliebigem Verhältnis mit Wasser mischbar sein. Erfindungsgemäß ist es aber ausreichend, wenn die Copolymere zumindest bei der gewünschten Einsatzkonzentration und beim gewünschten pH wasserlöslich sind. Im Regelfalle sollte die Löslichkeit in Wasser bei Raumtemperatur mindestens 20 g/l, bevorzugt mindestens 50 g/l und besonders bevorzugt mindestens 100 g/l betragen.

Die erfindungsgemäßen, hydrophob assoziierenden Copolymere umfassen neben den bereits erwähnten hydrophoben Gruppen daher hydrophile Gruppen in einer solchen Menge, dass die geschilderte Wasserlöslichkeit zumindest im für die jeweilige Anwendung vorgesehenen pH-Bereiche gewährleistet ist.

### Monomer (a)

Das erfindungsgemäße, hydrophob assoziierende Copolymer umfasst mindestens ein monoethylenisch ungesättigtes, wasserlösliches Monomer (a), welches dem erfindungsgemäßen Copolymer hydrophob assoziierende Eigenschaften verleiht und daher im Folgenden als hydrophob assoziierendes Monomer bezeichnet wird.

Erfindungsgemäß handelt es sich bei dem mindestens einen monoethylenisch ungesättigten wasserlöslichen Monomer (a) vorzugsweise um mindestens eine Verbindung der allgemeinen Formel

H₂C=C(R¹)-R⁴-O-(-CH₂-CH₂-O-)ₖ-(-CH₂-CH(R³)-O-)ₗ-R⁵ (I),

H₂C=C(R¹)-O-(-CH₂-CH₂-O-)ₖ-R² und/oder (II)

H₂C=C(R¹)-(C=O)-O-(-CH₂-CH₂-O-)ₖ-R² (III),

wobei die Einheiten -(-CH₂-CH₂-O-)ₖ und -(-CH₂-CH(R³)-O-)ₗ in Blockstruktur in der in Formel (I) dargestellten Reihenfolge angeordnet sind und die Reste und Indices die folgende Bedeutung haben:
k: eine Zahl von 6 bis 150,
l: eine Zahl von 5 bis 25,
R¹: H oder Methyl,
R²: ein aliphatischer und/oder aromatischer, geradkettiger oder verzweigter Kohlenwasserstoffrest mit 8 bis 40 Kohlenstoffatomen,
R³: unabhängig voneinander ein Kohlenwasserstoffrest mit mindestens 2 Kohlenstoffatomen,
R⁴: eine Einfachbindung oder eine zweiwertige, verknüpfende Gruppe, ausgewählt aus der Gruppe von -(CₙH₂ₙ)- [R^{4a}], -O-(C_{n'}H_{2n'})- [R^{4b}] und -C(O)-O-(C_{n"}H_{2n"})- [R^{4c}], wobei n, n' und n" jeweils für eine natürliche Zahl von 1 bis 6 steht,
R⁵: H oder ein C₁₋₃₀-Kohlenwasserstoffrest, vorzugsweise H oder ein C₁₋₅-Alkylrest und insbesondere H.

Bei den Monomeren (a) der Formel (I) ist also eine ethylenische Gruppe H₂C=C(R¹)- über eine zweiwertige, verknüpfende Gruppe -R⁴-O- mit einem Polyoxyalkylenrest mit Blockstruktur -(-CH₂-CH₂-O-)ₖ-(-CH₂-CH(R³)-O-)ₗ-H verbunden, wobei die beiden Blöcke -(-CH₂-CH₂-O-)ₖ und -(-CH₂-CH(R³)-O-)ₗ in der in Formel (I) dargestellten Reihenfolge angeordnet sind. Der Polyoxyalkylenrest weist eine terminale OH-Gruppe auf.

In der oben genannten Formel steht R¹ für H oder eine Methylgruppe. R⁴ steht für eine Einfachbindung oder eine zweiwertige, verknüpfende Gruppe, ausgewählt aus der Gruppe von -(CₙH₂ₙ)- [R^{4a}], -O-(C_{n'}H_{2n'})- [R^{4b}] und -C(O)-O-(C_{n"}H_{2n"})- [R^{4c}]. In den genannten Formeln stehen n, n' und n" jeweils für eine natürliche Zahl von 1 bis 6. Mit anderen Worten handelt es sich bei der verknüpfenden Gruppe um geradkettige oder verzweigte aliphatische Kohlenwasserstoffgruppen mit 1 bis 6 Kohlenwasserstoffatomen, welche entweder direkt, über eine Ethergruppe -O- oder über eine Esterguppe -C(O)-O- mit der ethylenischen Gruppe H₂C=C(R¹)- verknüpft sind. Bevorzugt handelt es sich bei den Gruppen -(CₙH₂ₙ)-, -(C_{n'}H_{2n'})- und -(C_{n"}H_{2n"})- um lineare aliphatische Kohlenwasserstoffgruppen.

Bevorzugt handelt es sich bei R^{4a} um eine Gruppe ausgewählt aus -CH₂-, -CH₂-CH₂- und -CH₂-CH₂-CH₂-, besonders bevorzugt ist eine Methylengruppe -CH₂-.

Bevorzugt handelt es sich bei R^{4b} um eine Gruppe ausgewählt aus -O-CH₂-CH₂-, -O-CH₂-CH₂-CH₂- und -O-CH₂-CH₂-CH₂-CH₂-, besonders bevorzugt ist -O-CH₂-CH₂-CH₂-CH₂-.

Bevorzugt handelt es sich bei R^{4c} um eine Gruppe ausgewählt aus -C(O)-O-CH₂-CH₂-, -C(O)O-CH(CH₃)-CH₂-, -C(O)O-CH₂-CH(CH₃)-, -C(O)O-CH₂-CH₂-CH₂-CH₂- und -C(O)O-CH₂-CH₂-CH₂-CH₂-CH₂-CH₂-, besonders bevorzugt sind -C(O)-O-CH₂-CH₂- und -C(O)O-CH₂-CH₂-CH₂-CH₂- und ganz besonders bevorzugt ist -C(O)-O-CH₂-CH₂-.

Besonders bevorzugt handelt es sich bei der Gruppe R⁴ um eine Gruppe R^{4a} oder R^{4b}, besonders bevorzugt um eine Gruppe R^{4b}.

Weiterhin besonders bevorzugt handelt es sich bei R⁴ um eine Gruppe ausgewählt aus -CH₂-oder -O-CH₂-CH₂-CH₂-CH₂-, ganz besonders bevorzugt ist -O-CH₂-CH₂-CH₂-CH₂-.

Die Monomere der Formel (I) weisen weiterhin einen Polyoxyalkylenrest auf, der aus den Einheiten -(-CH₂-CH₂-O-)ₖ und -(-CH₂-CH(R³)-O-)ₗ besteht, wobei die Einheiten in Blockstruktur in der in Formel (I) dargestellten Reihenfolge angeordnet sind. Der Übergang zwischen den beiden Blöcken kann abrupt oder auch kontinuierlich erfolgen.

Bei der Anzahl der Alkylenoxideinheiten k handelt es sich um eine Zahl von 6 bis 150, bevorzugt 12 bis 100, besonders bevorzugt 15 bis 80, ganz besonders bevorzugt 20 bis 30 und beispielsweise ca. 22 bis 25. Für den Fachmann auf dem Gebiet der Polyalkylenoxide ist klar, dass es sich bei den genannten Zahlen um Mittelwerte von Verteilungen handelt.

Beim dem zweiten, terminalen Block -(-CH₂-CH(R³)-O-)ₗ- stehen die Reste R³ unabhängig voneinander für Kohlenwasserstoffstoffreste von mindestens 2 Kohlenstoffatomen, bevorzugt mindestens 3 und besonders bevorzugt 3 bis 10 Kohlenstoffatomen. Es kann sich hierbei um einen aliphatischen und/oder aromatischen, linearen oder verzweigten Kohlenstoffrest handeln. Bevorzugt handelt es sich um aliphatische Reste.

Beispiele geeigneter Reste R³ umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen n-Propyl, n-Butyl, n-Pentyl und besonders bevorzugt ist ein n-Propylrest.

Bei dem Block -(-CH₂-CH(R³)-O-)ₗ- handelt es sich also um einen Block, der aus Alkylenoxideinheiten mit mindestens 4 Kohlenstoffatomen, bevorzugt mindestens 5 Kohlenstoffatomen und/oder Glycidylethern mit einer Ethergruppe von mindestens 2, bevorzugt mindestens 3 Kohlenstoffatomen besteht. Bevorzugt als Reste R³ sind die genannten Kohlenwasserstoffreste; bei den Bausteinen des zweiten terminalen Block handelt es sich besonders bevorzugt um mindestens 5 Kohlenstoffatome umfassende Alkylenoxideinheiten, wie Pentenoxideinheiten oder Einheiten höherer Alkylenoxide.

Bei der Anzahl der Alkylenoxideinheiten I handelt es sich um eine Zahl von 5 bis 25, bevorzugt 6 bis 20, besonders bevorzugt 8 bis 18, ganz besonders bevorzugt 10 bis 15 und beispielsweise ca. 12.

Bei den Monomeren der Formel (I) ist also eine monoethylenische Gruppe mit einer Polyoxyalkylengruppe mit Blockstruktur verknüpft, und zwar zunächst mit einem hydrophilen, Polyethylenoxideinheiten aufweisenden Block und dieser wiederum mit einem zweiten terminalen, hydrophoben Block, welcher mindestens aus Butenoxiddeinheiten, bevorzugt mindestens Pentenoxideinheiten oder Einheiten höherer Alkylenoxide wie beispielsweise Dodecenoxid aufgebaut ist. Der zweite Block weist eine terminale OH-Gruppe auf. Die Endgruppe ist also im Gegensatz zu den hydrophob assoziierenden Monomeren (a) nach Formel (II) und/oder (III) nicht mit einem Kohlenwasserstoffrest zum hydrophoben Assoziieren verethert, sondern der terminale Block -(-CH₂-CH(R³)-O-)ₗ mit den Resten R³ ist selbst für das hydrophobe Assoziieren der unter Verwendung der Monomere (a) der Formel (I) hergestellten Copolymere verantwortlich.

Bei dem Rest R⁵ handelt es sich um H oder einen bevorzugt aliphatischen Kohlenwasserstoffrest mit 1 bis 30 C-Atomen, bevorzugt 1 bis 10 und besonders bevorzugt 1 bis 5 C-Atomen. Bevorzugt handelt es sich bei R⁵ um H, Methyl oder Ethyl, besonders bevorzugt um H oder Methyl und ganz besonders bevorzugt um H.

Bei den Monomeren (a) nach Formel (II) handelt es sich bevorzugt um Verbindungen der allgemeinen Formel H₂C=CH-O-(-CH₂-CH₂-O-)ₖ-R², wobei k eine Zahl zwischen 10 und 40 und R² ein Tristyrylphenylrest darstellt.

Bei den Monomeren (a) nach Formel (III) steht R¹ bevorzugt für Methyl, k für eine Zahl zwischen 6 und 30 und R² für einen C₁₂-Alkylrest oder einen Tristyrylphenylrest.

Die drei Monomervertreter (I), (II) und (III) können am Aufbau des Copolymers in beliebigen Anteilen beteiligt sein.

Für den Fachmann auf dem Gebiet von Polyalkylenoxid-Blockcopolymeren ist klar, dass der Übergang zwischen den beiden Blöcken je nach der Art der Herstellung abrupt oder auch kontinuierlich erfolgen kann. Bei einem kontinuierlichen Übergang befindet sich zwischen den beiden Blöcken noch eine Übergangzone, welche Monomere beider Blöcke umfasst. Wenn man die Blockgrenze auf die Mitte der Übergangzone festlegt, kann dem entsprechend der erste Block -(-CH₂-CH₂O-)ₖ noch geringe Mengen an Einheiten -CH₂-CH(R³)-O- und der zweite Block -(-CH₂-CH(R³)-O-)ₗ-geringe Mengen an Einheiten -CH₂-CH₂-O- aufweisen, wobei diese Einheiten aber nicht statistisch über den Block verteilt sind, sondern in der genannten Übergangszone angeordnet sind.

Erfindungsgemäß sind die Monomere (a) wasserlöslich. Im Regelfalle sollte die Löslichkeit der Monomere (a) in Wasser bei Raumtemperatur mindestens 10 g/l, bevorzugt mindestens 50 g/l und besonders bevorzugt mindestens 100 g/l betragen.

Die Menge der monoethylenisch ungesättigten, hydrophob assoziierenden Monomere (a) richtet sich nach dem jeweiligen Verwendungszweck des erfindungsgemäßen Copolymers und beträgt im Allgemeinen 0,1 bis 20 Gew.-% bezogen auf die Gesamtmenge aller Monomere im Copolymer. Bevorzugt beträgt die Menge 0,5 bis 15 Gew.-%.

### Hydrophile Monomere (b)

Über die Monomere (a) hinaus umfasst das erfindungsgemäße, hydrophob assoziierende Copolymer mindestens ein davon verschiedenes, monoethylenisch ungesättigtes, hydrophiles Monomer (b). Selbstverständlich können auch Gemische mehrerer verschiedener hydrophiler Monomere (b) eingesetzt werden.

Die hydrophilen Monomere (b) umfassen neben einer ethylenisch ungesättigten Gruppe eine oder mehrere hydrophile Gruppen. Bei den hydrophilen Gruppen handelt es sich insbesondere um funktionelle Gruppen, welche O- und/oder N-Atome umfassen. Sie können darüber hinaus als Heteroatome insbesondere S- und/oder P-Atome umfassen.

Besonders bevorzugt sind die Monomere (b) in beliebigem Verhältnis mit Wasser mischbar, zur Ausführung der Erfindung ist es jedoch ausreichend, dass das erfindungsgemäße, hydrophob assoziierende Copolymer die eingangs erwähnte Wasserlöslichkeit besitzt. Im Regelfalle sollte die Löslichkeit der Monomere (b) in Wasser bei Raumtemperatur mindestens 100 g/l, bevorzugt mindestens 200 g/l und besonders bevorzugt mindestens 500 g/l betragen.

Beispiele geeigneter funktioneller Gruppen umfassen Carbonylgruppen >C=O, Ethergruppen -O-, insbesondere Polyethylenoxidgruppen -(CH₂-CH₂-O-)ₙ-, wobei n bevorzugt für eine Zahl von 1 bis 200 steht, Hydroxylgruppen -OH, Estergruppen -C(O)O-, primäre, sekundäre oder tertiäre Aminogruppen, Ammoniumgruppen, Amidgruppen -C(O)-NH-, Carboxamidgruppen -C(O)-NH₂ oder saure Gruppen wie Carboxylgruppen -COOH, Sulfonsäuregruppen -SO₃H, Phosphonsäuregruppen -PO₃H₂ oder Phosphorsäuregruppen -OP(OH)₃.

Beispiele bevorzugter funktioneller Gruppen umfassen Hydroxylgruppen -OH, Carboxylgruppen -COOH, Sulfonsäuregruppen -SO₃H, Carboxamidgruppen -C(O)-NH₂, Amidgruppen -C(O)-NH-sowie Polyethylenoxidgruppen -(CH₂-CH₂-O-)ₙ-H, wobei n bevorzugt für eine Zahl von 1 bis 200 steht.

Die funktionellen Gruppen können direkt an die ethylenisch ungesättigte Gruppe angebunden sein, oder aber über eine oder mehrere verknüpfende Kohlenwasserstoffgruppen mit der ethylenisch ungesättigten Gruppe verbunden sein.

Bei dem mindestens einen hydrophilen Monomer (b) handelt es sich bevorzugt um ein saure Gruppen umfassendes Monomer, wobei es sich bei den sauren Gruppen erfindungsgemäß um mindestens eine Gruppe ausgewählt aus der Gruppe von -COOH, -SO₃H und -PO₃H₂ handelt. Bevorzugt sind auch Monomere der allgemeinen Formel H₂C=C(R⁷)R⁸, wobei R⁷ für H oder Methyl und R⁸ für eine hydrophile Gruppe oder eine, eine oder mehrere hydrophile Gruppen umfassende Gruppe steht.

Bei den Gruppen R⁸ handelt es sich um Gruppen, welche Heteroatome in einer solchen Menge umfassen, so dass die eingangs definierte Wasserlöslichkeit erreicht wird.

Beispiele geeigneter Monomere (b) umfassen saure Gruppen umfassende Monomere, beispielsweise -COOH-Gruppen umfassende Monomere wie Acrylsäure oder Methacrylsäure, Crotonsäure, Itaconsäure, Maleinsäure oder Fumarsäure, Sulfonsäuregruppen umfassende Monomere wie Vinylsulfonsäure, Allylsulfonsäure, 3-Allyloxy-2-hydroxypropansulfonsäure, 2-Acrylamido-2-methylpropansulfonsäure (AMPS^{®}), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentansulfonsäure oder Phosphonsäuregruppen umfassende Monomere wie Vinylphosphonsäure, Allylphosphonsäure, N-(Meth)acrylamidoalkylphosphonsäuren oder (Meth)-acryloyloxyalkylphosphonsäuren.

Zu nennen sind weiterhin Acrylamid und Methacrylamid sowie Derivate davon, wie beispielsweise N-Methyl(meth)acrylamid, N, N'-Dimethyl(meth)acrylamid sowie N-Methylolacrylamid, N-Vinylderivate wie N-Vinylformamid, N-Vinylacetamid, N-Vinylpyrrolidon oder N-Vinylcaprolactam sowie Vinylester, wie Vinylformiat oder Vinylacetat. N-Vinylderivate können nach Polymerisation zu Vinylamin-Einheiten, Vinylester zu Vinylalkohol-Einheiten hydrolysiert werden.

Weitere Beispiele umfassen Hydroxyl- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel H₂C=C(R¹)-COO-(-CH₂-CH(R⁹)-O-)_{b}-R¹⁰ (IVa) bzw. H₂C=C(R¹)-O-(-CH₂-CH(R⁹)-O-)_{b}-R¹⁰ (IVb) wobei R¹ wie oben definiert ist und b für eine Zahl von 2 bis 200 steht, bevorzugt 2 bis 100 steht. Bei den Resten R⁹ handelt es sich unabhängig voneinander um H, Methyl oder Ethyl, bevorzugt H oder Methyl, mit der Maßgabe, dass es sich bei mindestens 50 mol-% der Reste R⁹ um H handelt. Bevorzugt handelt es sich bei mindestens 75 mol-% der Reste R⁹ um H, besonders bevorzugt bei mindestens 90 mol-% und ganz besonders bevorzugt ausschließlich um H. Bei dem Rest R¹⁰ handelt es sich um H, Methyl oder Ethyl, bevorzugt H oder Methyl. Die einzelnen Alkylenoxideinheiten können statistisch oder blockweise angeordnet werden. Bei einem Blockcopolymer kann der Übergang zwischen den Blöcken abrupt oder graduell sein.

Geeignete hydrophile Monomere (b) sind weiterhin Ammoniumgruppen aufweisende Monomere, insbesondere Ammoniumderivate von N-(ω-Aminoalkyl)(meth)acrylamiden oder ω-Aminoalkyl(meth)acrylestern.

Insbesondere kann es sich bei Ammoniumgruppen aufweisenden Monomeren (b) um Verbindungen der allgemeinen Formeln H₂C=C(R⁷)-CO-NR¹³-R¹¹-NR¹²₃⁺ X- (Va) und/oder H₂C=C(R⁷)-COO-R¹¹-NR¹²₃⁺ X- (Vb) handeln, wobei R⁷ die oben angegebene Bedeutung hat, also für H oder Methyl steht, R¹¹ für eine bevorzugt lineare C₁- bis C₄-Alkylengruppe steht und R¹³ für H oder eine C₁- bis C₄-Alkylgruppe, bevorzugt H oder Methyl. Bei den Resten R¹² handelt es sich unabhängig voneinander um C₁- bis C₄-Alkyl, bevorzugt Methyl oder eine Gruppe der allgemeinen Formel -R¹⁴-SO₃H, wobei R¹⁴ für eine bevorzugt lineare C₁- bis C₄-Alkylengruppe oder eine Phenylgruppe steht, mit der Maßgabe, dass es sich im Regelfalle bei nicht mehr als einem der Substituenten R¹² um einen Sulfonsäuregruppen aufweisenden Substituenten handelt. Besonders bevorzugt handelt es sich bei den drei Substituenten R¹² um Methylgruppen, d.h. das Monomer weist eine Gruppe - N(CH₃)₃⁺ auf. X⁻ steht in obiger Formel für ein einwertiges Anion, beispielsweise Cl⁻. Selbstverständlich kann X⁻ auch für einen entsprechenden Bruchteil eines mehrwertigen Anions stehen, obwohl dies nicht bevorzugt ist. Beispiele geeigneter Monomere (b) der allgemeinen Formel (Va) bzw. (Vb) umfassen Salze von 3-Trimethylammonium-propylacrylamiden oder 2-Trimethylammoniumethyl(meth)acrylaten, beispielsweise die entsprechenden Chloride wie 3-Trimethylammoniumpropylacrylamidchlorid (DIMAPAQUAT) und 2-Trimethylammoniumethylmethacrylatchlorid (MADAME-QUAT).

Beim Monomer (b) kann es sich also auch um ein neutrales Monomer (b1) handeln und hier insbesondere um ein Monomer ausgewählt aus der Gruppe von (Meth)acrylamid, N-Methyl(meth)-acrylamid, N,N-Dimethyl(meth)acrylamid, N-Methylol(meth)acrylamid, N-Vinylformamid oder N-Vinyl-2-pyrrolidon handelt, und bei dem Monomer (b2) um mindestens eines ausgewählt aus der Gruppe von (Meth)acrylsäure, Vinylsulfonsäure, Allylsulfonsäure, 2-Acrylamido-2-methylpropansulfonsäure (AMPS^{®}), 2-Methacrylamido-2-methylpropansulfonsäure, 2-Acrylamidobutansulfonsäure, 3-Acrylamido-3-methyl-butansulfonsäure oder 2-Acrylamido-2,4,4-trimethylpentan-sulfonsäure oder Vinylphosphonsäure. Das Copolymer kann darüber hinaus noch mindestens ein kationisches, Ammoniumgruppen aufweisendes Monomer (b3) umfassen, wobei es sich bei dem kationischen Monomer um Salze von 3-Trimethylammoniumpropyl(meth)acrylamiden und 2-Trimethylammoniumethyl(meth)acrylaten handelt.

Die oben genannten hydrophilen Monomere können selbstverständlich nicht nur in der dargestellten Säure- bzw. Baseform eingesetzt werden, sondern auch in Form entsprechender Salze. Es ist auch möglich, saure oder basische Gruppen nach der Bildung des Polymers in entsprechende Salze umzuwandeln.

Wie bereits dargelegt, umfasst das erfindungsgemäße Copolymer in einer bevorzugten Ausführungsform der Erfindung mindestens ein saure Gruppen umfassendes Monomer (b). Bevorzugt handelt es sich hierbei um Monomere, welche mindestens eine Gruppe ausgewählt aus der Gruppe von -COOH, -SO₃H oder -PO₃H₂ umfassen, besonders bevorzugt sind COOH-Gruppen und/oder -SO₃H-Gruppen umfassende Monomere, und deren geeignete Salze.

Bevorzugt handelt es sich bei mindestens einem der Monomere (b) um ein Monomer, ausgewählt aus der Gruppe von (Meth)acrylsäure, Vinylsulfonsäure, Allylsulfonsäure oder 2-Acrylamido-2-methylpropansulfonsäure (AMPS^{®}), besonders bevorzugt um Acrylsäure und/oder AMPS^{®} bzw. deren Salze.

### Komponente (c)

Die erfindungsgemäßen Copolymere werden vorteilhaft in Gegenwart mindestens einer nicht-polymerisierbaren, oberflächenaktiven Verbindung hergestellt, bei der es sich vorzugsweise um mindestens ein nicht-ionisches Tensid handelt. Aber auch anionische und kationische Tenside sind geeignet, sofern sie nicht an der Polymerisationsreaktion teilnehmen.

Zwar offenbart unsere eingangs erwähnte ältere Internationale Patentanmeldung PCT/EP2010/ 056685 auf S. 34-45 ("Teil B) Herstellung der hydrophob assoziierenden Copolymere") die Herstellung vergleichbarer Copolymere, die ohne die Verwendung einer Komponente (c) erzeugt wurden und sich in gewissem Umfang ebenfalls zur Lösung der erfindungsgemäßen Aufgabe eignen - dieser Teil der älteren PCT- Anmeldung wird daher durch Bezugnahme in den hier vorliegenden Anmeldetext aufgenommen, das Copolymer gemäß unserer eingangs erwähnten älteren Internationale Patentanmeldung PCT/EP2010/06107, welches unter Zusatz eines Tensids hergestellt wurde, zeigt aber eine deutliche Verbesserung der Polymereigenschaften, insbesondere der Verdickungswirkung, und außerdem konnte der Gelanteil signifikant reduziert werden. Mit anderen Worten geht es prinzipiell auch ohne die Verwendung dieses Tensids, wesentlich bessere Ergebnisse können jedoch unter Verwendung dieses Tensids erreicht werden.

Bei dem nicht-ionischen Tensid handelt es sich bevorzugt um einen ethoxylierten, langkettigen aliphatischen Alkohol, welcher optional aromatische Anteile enthalten kann. Exemplarisch seien genannt: C₁₂₋₁₄-Fettalkoholethoxylate, C₁₆₋₁₈-Fettalkoholethoxylate, C₁₃-Oxoalkoholethoxylate, C₁₀-Oxoalkoholethoxylate, C₁₃₋₁₅-Oxoalkoholethoxylate, C₁₀-Guerbetalkoholethoxylate und Alkylphenolethoxylate.

Als geeignetes Tensid kommt insbesondere mindestens ein Vertreter in Frage, der ausgewählt wird aus der Reihe der ethoxylierten Alkylphenole, der ethoxylierten gesättigten iso-C₁₃-Alkohole und/oder der ethoxylierten C₁₀-Guerbetalkohole.

### Monomere (d)

Die erfindungsgemäßen Copolymere können in Spezialfällen neben den Monomeren (a) und (b) optional auch Monomere (d) umfassen, welche über zwei oder mehrere, bevorzugt zwei ethylenisch ungesättigte Gruppen verfügen. Hierdurch kann eine gewisse Vernetzung des Copolymers erreicht werden, sofern das in der vorgesehenen Anwendung des Copolymers keine unerwünschten negativen Auswirkungen hat. Ein zu hoher Vernetzungsgrad sollte aber auf jeden Fall vermieden werden; insbesondere darf die geforderte Wasserlöslichkeit des Copolymers nicht beeinträchtigt werden. Ob eine leichte Vernetzung im Einzelfalle sinnvoll sein kann, richtet sich nach der jeweiligen Anwendung des Copolymers, und der Fachmann trifft eine entsprechende Auswahl.

Beispiele geeigneter Monomere (d) umfassen 1,4-Butandioldi(meth)acrylat, 1,6-Hexandioldi(meth)acrylat, 1,3-Butylenglykoldi(meth)acrylat , Neopentylglykoldi(meth)acrylat, Ethylenglykoldi(meth)acrylat , Diethylenglykoldi(meth)acrylat, Triethylenglykoldi(meth)acrylat oder Oligoethylenglykoldi(meth)acrylate wie bspw. Polyethylenglykol-bis(meth)acrylat, N,N'-Methylenbis-(meth)acrylamid, Ethylenglykoldivinylether, Triethylenglykoldivinylether, Triallylamin, Triallylaminmethammoniumchlorid, Tetraallylammoniumchlorid oder Tris(2-hydroxy)isocyanurattri-(meth)acrylat.

Sofern überhaupt vorhanden, werden vernetzend wirkende Monomere (d) aber nur in geringen Mengen eingesetzt. Im Regelfalle sollte die Menge der Monomere (d) 1,0 Gew.-% bezüglich der Menge alle eingesetzten Monomere nicht überschreiten. Bevorzugt sollten nicht mehr als 0,5 Gew.-% und besonders bevorzugt nicht mehr als 0,1 Gew.-% eingesetzt werden. Art und Menge des Vernetzers werden vom Fachmann je nach der gewünschten Anwendung des Copolymers festgelegt.

Erfindungsgemäß bevorzugt erfolgt die Verwendung des Copolymers als verdickend wirkendes, rheologisches Additiv für das "Hydraulic Fracturing". Das besagte Copolymer kann aber auch als verdickend wirkendes, rheologisches Additiv für Komplettierungsflüssigkeiten, Abstandshalterflüssigkeiten ("Spacerflüssigkeiten") und Bohrspülungsflüssigkeiten verwendet werden sowie als verdickend wirkendes, rheologisches Additiv und/oder als Stabilisator für Schäume.

Die erfindungsgemäße Verwendung erfolgt vorzugsweise bei einer Temperatur im Bereich von 40 °C bis 120 °C, besonders bevorzugt bei 50 °C bis 100 °C.

Insgesamt sollten die Monomer-Komponente (a) in Mengen von 0,1 bis 20,0 Gew.-%, bevorzugt von 0,1 bis 5 Gew.-% die Monomer-Komponente (b) in Mengen von 50,0 bis 99,9 Gew.-% und die Komponente (c) in Mengen von 0,1 bis 10,0 Gew.-%, jeweils bezogen auf die Gesamtmenge aller Komponenten im Copolymer, enthalten sein. Die genaue Menge richtet sich nach der Art und dem gewünschten Verwendungszweck der hydrophob assoziierenden Copolymere und wird vom Fachmann entsprechend festgelegt.

Besonders bevorzugt handelt es sich bei R³ der Monomerkomponente (a) gemäß Formel (I) um einen Kohlenwasserstoffrest mit mindestens 3 Kohlenstoffatomen.

Besonders bevorzugt handelt es sich hinsichtlich der Monomerkomponente (a) gemäß der Formel (I) bei R¹ um H und bei R⁴ um eine Gruppe ausgewählt aus -CH₂- und -O-CH₂-CH₂-CH₂-CH₂-.

Wie bereits weiter oben ausgeführt wurde, handelt es sich bei dem mindestens einem Monomer (b) bevorzugt um ein saure Gruppen umfassendes Monomer und/oder dessen Salze. Bei den sauren Gruppen handelt es sich bevorzugt um mindestens eine Gruppe, ausgewählt aus -COOH, -SO₃H und -PO₃H₂ sowie deren Salzen.

Generell ist es als bevorzugt anzusehen, wenn es sich beim Copolymer um ein Copolymer (A1) handelt, welches mindestens zwei verschiedene hydrophile Monomere (b) umfasst, und es sich dabei um mindestens
- ein neutrales hydrophiles Monomer (b1), bevorzugt Acrylamid, und
- mindestens ein hydrophiles anionisches Monomer (b2) handelt, welches mindestens eine saure Gruppe ausgewählt aus der Gruppe von -COOH, -SO₃H oder -PO₃H₂ umfasst.
wobei die Menge der Monomere (a) 0,1 bis 20 Gew.-% und die aller Monomere (b) zusammen 70 bis 99,5 Gew.-% bezüglich der Menge aller Monomere im Copolymer beträgt.

Die bevorzugten neutralen Monomere (b1) sind (Meth)acrylamid, *N*-Methyl(meth)acrylamid, *N,N*-Dimethyl(meth)acrylamid, *N*-Methylol(meth)acrylamid, *N*-Vinylformamid und *N*-Vinyl-2-pyrrolidon, handelt, und bei dem Monomer (b2) um mindestens ein Monomer, ausgewählt aus der Gruppe (Meth)acrylsäure, Vinylsulfonsäure, Allylsulfonsäure, 2-Acrylamido-2-methylpropansulfonsäure (AMPS^{®}), 2-Methacrylamido-2-methylpropansulfonsäure, 2-Acrylamidobutansulfonsäure, 3-Acrylamido-3-methyl-butansulfonsäure, 2-Acrylamido-2,4,4-trimethylpentansulfonsäure und Vinylphosphonsäure.

Das erfindungsgemäße Copolymer kann darüber hinaus noch mindestens ein kationisches, Ammoniumgruppen aufweisendes Monomer (b3) umfassen, und zwar besonders bevorzugt Salze von 3-Trimethylammoniumpropyl(meth)acrylamiden und/oder 2-Trimethylammoniumethyl(meth)acrylaten.

Des Weiteren ist es als bevorzugt anzusehen, wenn es sich beim Copolymer um ein Copolymer (A2) handelt, welches mindestens zwei verschiedene hydrophile Monomere (b) umfasst, und es sich dabei um mindestens
- ein neutrales hydrophiles Monomer (b1), und
- mindestens ein kationisches Monomer (b3) handelt,
wobei die Menge der Monomere (a) 0,1 bis 20 Gew.-% und die aller Monomere (b) zusammen 70 bis 99,9 Gew.-%, bezogen auf die Menge aller Monomere im Copolymer, beträgt.

Schließlich ist es als bevorzugt anzusehen, wenn es sich beim Copolymer um ein Copolymer (A3) handelt, welches mindestens zwei verschiedene hydrophile Monomere (b) umfasst, und es sich dabei um mindestens
• 5 bis 50 Gew.-% mindestens eines neutralen hydrophilen Monomers (b1), und
• 25 bis 94,9 Gew.-% mindestens eines Sulfonsäuregruppen umfassenden, anionischen Monomers (b2) handelt,
wobei die Menge der Monomere (a) 0,1 bis 20 Gew.-%, und die aller Monomere (b) zusammen 70 bis 99,9 Gew.-% bezüglich der Menge aller Monomere im Copolymer beträgt.

Besonders bevorzugt umfasst das erfindungsgemäße Copolymer noch bis zu 1 Gew.-% des bereits oben erwähnten vernetzenden, mindestens zwei ethylenisch ungesättigte Gruppen umfassenden Momomers (d), wobei es sich bei Monomer (d) um mindestens ein Monomer, ausgewählt aus der Gruppe Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat, handelt.

Herstellung des wasserlöslichen, hydrophob assoziierenden Copolymers

Die erfindungsgemäßen Copolymere können nach dem Fachmann prinzipiell bekannten Methoden durch radikalische Polymerisation der Monomere (a), (b) sowie optional (d) hergestellt werden, beispielsweise durch Lösungs- oder Gelpolymerisation in wässriger Phase.

Die Synthese der erfindungsgemäß verwendeten Monomere (a) der Formel (I) werden besonders bevorzugt nach dem oben dargestellten Herstellverfahren durch Alkoxylierung von ethylenisch-ungesättigten Alkoholen, wie beispielsweise Hydroxybutylvinylether, optional gefolgt von einer Veretherung bereit gestellt.

In einer bevorzugten Ausführungsform wird die Herstellung mittels Gelpolymerisation in wässriger Phase vorgenommen. Zur Gelpolymerisation wird zunächst eine Mischung aus den Monomeren (a), (b) und ggf. (d), Initiatoren, dem Tensid (c) und sonstigen Hilfsstoffen mit Wasser bereitgestellt. Saure Monomere können vor der Polymerisation ganz oder teilweise neutralisiert werden. Bevorzugt ist ein pH-Wert von ca. 4 bis ca. 9. Die Konzentration aller Komponenten mit Ausnahme der Lösemittel beträgt üblicherweise ca. 20 bis 60 Gew.-%, bevorzugt ca. 30 bis 50 Gew.-%.

Es wird empfohlen, mindestens ein hydrophob assoziierendes Monomer (a) und mindestens ein hydrophiles Monomer (b) einer wässrigen Lösungspolymerisation in Gegenwart mindestens einer oberflächenaktiven Komponente (c) zu unterziehen, wobei vorzugsweise die Monomer-Komponente (a) vorgelegt und anschließend nacheinander die Monomer-Komponente (b) und die Komponente (c) zugesetzt werden. Außerdem kann optional der Monomer-Komponete (a) eine Mischung enthaltend die Monomer-Komponente (b) und die Komponente (c) zugesetzt werden. Von der Erfindung berücksichtigt wird aber auch, dass der Monomer-Komponete (a) die Komponente (c) zugesetzt und anschließend der erhaltenen Mischung die Monomer-Komponente (b) zugefügt wird. Die Polymerisation sollte insbesondere bei einem pH-Wert im Bereich von 5,0 bis 7,5 und vorzugsweise bei einem pH-Wert von 6,0 durchgeführt werden.

Wichtig ist die Zugabe des Tensids (c) zur Reaktionslösung noch vor der Initiierung der Polymerisation, wobei die Zugabereihenfolge der Monomeren (a) und (b) sowie der Komponente (c) - wie eben beschrieben - weitgehend frei gewählt werden kann.

Die Mischung wird anschließend fotochemisch und/oder thermisch polymerisiert, vorzugsweise bei -5 °C bis 50 °C. Sofern thermisch polymerisiert wird, setzt man bevorzugt Polymerisationsinitiatoren ein, die schon bei vergleichsweise niedriger Temperatur starten, wie beispielsweise Redoxinitiatoren. Die thermische Polymerisation kann schon bei Raumtemperatur oder durch Erwärmen der Mischung, bevorzugt auf Temperaturen von nicht mehr als 50°C vorgenommen werden. Die fotochemische Polymerisation wird üblicherweise bei Temperaturen von -5 °C bis 10 °C vorgenommen. Besonders vorteilhaft kann man fotochemische und thermische Polymerisation miteinander kombinieren, indem man der Mischung sowohl Initiatoren für die thermische als auch für die fotochemische Polymerisation zugibt. Die Polymerisation wird hierbei zunächst fotochemisch bei niedrigen Temperaturen, vorzugsweise -5 bis +10 °C gestartet. Durch die freiwerdende Reaktionswärme erwärmt sich die Mischung und hierdurch wird zusätzlich die thermische Polymerisation gestartet. Mittels dieser Kombination lässt sich ein Umsatz von mehr 99 % erreichen.

Die Gelpolymerisation erfolgt in aller Regel ohne Rühren. Sie kann batchweise erfolgen, indem man die Mischung in einem geeigneten Gefäß bei einer Schichtdicke von 2 bis 20 cm bestrahlt und/oder erwärmt. Durch die Polymerisation entsteht ein festes Gel. Die Polymerisation kann auch kontinuierlich erfolgen. Hierzu benutzt man eine Polymerisationsapparatur, welche ein Transportband zur Aufnahme der zu polymerisierenden Mischung verfügt. Das Transportband ist mit Einrichtungen zum Erwärmen oder zum Bestrahlen mit UV-Strahlung ausgestattet. Hiernach gießt man die Mischung mittels einer geeigneten Vorrichtung am einen Ende des Bandes auf, im Zuge des Transportes in Bandrichtung polymerisiert die Mischung und am anderen Ende des Bandes kann man das feste Gel abnehmen.

Das erhaltene Gel wird nach der Polymerisation vorzugsweise zerkleinert und getrocknet. Die Trocknung sollte bevorzugt bei Temperaturen unterhalb von 100 °C erfolgen. Zum Vermeiden des Zusammenklebens kann man für diesen Schritt ein geeignetes Trennmittel verwenden. Man erhält das hydrophob assoziierende Copolymer als Granulat oder Pulver.

Weitere Einzelheiten zur Durchführung einer Gelpolymerisation sind beispielsweise in DE 10 2004 032 304 A1, Abschnitte [0037] bis [0041] offenbart.

Die erfindungsgemäßen Copolymere besitzen vorzugsweise ein zahlenmittleres Molekulargewicht Mₙ von 50.000 bis 25.000.000 g/mol.

Da das erhaltene Polymerpulver bzw. -granulat im Zuge der Anwendung am Einsatzort in der Regel als wässrige Lösung eingesetzt wird, muss das Polymer vor Ort in Wasser aufgelöst werden. Dabei kann es mit den beschriebenen, hochmolekularen Polymeren zu unerwünschten Verklumpungen kommen. Um dies zu vermeiden, kann dem erfindungsgemäßen Polymer bereits bei der Synthese ein Hilfsmittel, welches die Auflösung des getrockneten Polymers in Wasser beschleunigt bzw. verbessert, zugesetzt werden. Bei diesem Hilfsmittel kann es sich beispielsweise um Harnstoff handeln.

Verwendung des wasserlöslichen, hydrophob assoziierenden Copolymers

Das hydrophob assoziierende Copolymer kann, wie schon eingangs erwähnt, erfindungsgemäß zur Verdickung wässriger Phasen eingesetzt werden.

Durch die Auswahl von Art und Menge der Monomere (a), (b), (c) und (d) lassen sich die Eigenschaften der Copolymere an die jeweiligen technischen Anforderungen anpassen.

Die Einsatzkonzentration wird vom Fachmann je nach der Art der zu verdickenden wässrigen Phase sowie der Art des Copolymers festgelegt. Im Regelfalle beträgt die Konzentration des Copolymers 0,05 bis 5 Gew.-% bezüglich der wässrigen Phase, bevorzugt 0,1 bis 2 Gew.-% und besonders bevorzugt 0,15 bis 1 Gew.-%.

Bei den zu verdickenden wässrigen Phasen handelt es sich, wie bereits oben erwähnt, z.B. um Formulierungen zum "Hydraulic Fracturing", Komplettierungsflüssigkeiten, Abstandshalterflüssigkeiten ("Spacerflüssigkeiten") und Bohrspülungsflüssigkeiten sowie wässrige Formulierungen zur Schaumerzeugung.

Die Copolymere können hierbei alleine eingesetzt werden, oder auch in Kombination mit anderen verdickenden Komponenten, beispielsweise mit anderen verdickenden Polymeren zusammen. Sie können weiterhin beispielsweise gemeinsam mit Tensiden zu einem verdickenden System formuliert werden. Die Tenside können in wässriger Lösung Mizellen bilden und die hydrophob assoziierenden Copolymere können gemeinsam mit den Mizellen ein dreidimensionales, verdickend wirkendes Netzwerk bilden.

Zum Einsatz kann man das Copolymer direkt in der zu verdickenden wässrigen Phase lösen. Denkbar ist es auch, das Copolymer vorzulösen und dann die gebildete Lösung dem zu verdickenden System zuzugeben.

Die folgenden Beispiele sollen die Erfindung näher erläutern:

### Beispiele

### 1. Herstellungsverfahren

### 1.1 Herstellungsbeispiel 1 (Vergleich): ohne Tensid-Zugabe während der Polymerisation

In einem 3L-Gefäß mit Rührer und Thermometer wurden 242,5 g einer 50 %-igen Na-AMPS^{®}-Lösung (AMPS^{®} 2405, Fa. Lubrizol) vorgelegt. Unter Rühren wurden 295,8 g Wasser zugegeben. Anschließend wurden nacheinander 1,2 g Surfynol DF 58 und 0,4 g Baysilone EN (Fa. Bayer) als Entschäumer zugegeben. Nach Zugabe von 4,6 g Pluriol A1190V+12PeO (Entwicklungsprodukt der Fa. BASF bestehend aus Hydroxybutylvinylether mit 25 Ethylenoxideinheiten und 12 Pentenoxideinheiten) wurden 228,8 g einer 50 %-igen Acrylamid-Lösung (Fa. Cytec) zugegeben. Nach Zugabe von 2,4g einer 5 %-igen Versenex-Lösung zur Entstabilisierung der Acrylamid-Lösung wurde der pH-Wert mit einer 20 %-igen NaOH-Lösung und/oder einer 20 %-igen H₂SO₄-Lösung auf 6,0 eingestellt. Während der Inertisierung durch 30-minütige Spülung mit Stickstoff wurde die Lösung auf ca. 20 °C abgekühlt. Anschließend wurde die Lösung in einen Plastikbehälter mit den Maßen (b*t*h) 15cm*10cm*20cm umgefüllt und nacheinander wurden 16,0 g (200 ppm) 10 %-iger 2,2'-Azo-bis-(2-amidinopropan)-dihydrochlorid, 0,5g (10ppm) 1 %-iger Bisulfitlösung, 8g (6ppm) 0,1 %-iger tert-Butylhydro-peroxidlösung und 4,0 g (5 ppm) 1 %-iger Eisen(II)sulfatlösung zugesetzt.

Die Polymerisation wurde durch Bestrahlen mit UV-Licht (zwei Philips Röhren; Cleo Performance 40 W) gestartet. Nach ca. 2 - 3 h wurde das schnittfeste Gel aus dem Plastikbehälter genommen und mit einer Schere in ca. 5 cm * 5 cm * 5 cm große Gelwürfel geschnitten. Bevor die Gelwürfel mittels eines herkömmlichen Fleischwolfs zerkleinert wurden, wurden Sie mit dem Trennmittel Sitren 595 (Polydimethylsiloxan-Emulsion; Firma Goldschmidt) eingestrichen. Bei dem Trennmittel handelt es sich um eine Polydimethylsiloxanemulsion, die 1 : 20 mit Wasser verdünnt wurde.

Das erhaltene Gelgranulat wurde anschließend gleichmäßig auf Trockengitter verteilt und in einem Umlufttrockenschrank bei ca. 90 - 120 °C im Vakuum bis zur Gewichtskonstanz getrocknet. Es wurden ca. 500 g eines weißen, harten Granulats erhalten, welches mit Hilfe einer Zentrifugalmühle in einen pulverigen Zustand überführt wurde.

### 1.2 Herstellungsbeispiele 2 - 4 (erfindungsgemäß): mit Tensid-Zugabe während der Gelpolymerisation

Zusätzlich zur Monomerlösung wie unter Vergleichsbeispiel 1 beschrieben wurde als Tensid Lutensol TO15 (Fa. BASF, C₁₃-Oxoalkoholethoxylat + 15 Ethylenoxideinheiten) in folgenden Mengen in der Monomerlösung vor der Polymerisation aufgelöst:
Herstellungsbsp. 2: 1 % Lutensol TO15 (entspricht 2,4 g)
Herstellungsbsp. 3: 2 % Lutensol TO15 (entspricht 4,8 g)
Herstellungsbsp. 4: 3 % Lutensol TO15 (entspricht 7,2 g)

### 1.3 Herstellungsbeispiele 5 - 10 (erfindungsgemäß)

Ausgehend von Herstellungsbsp. 3 wurden die folgenden Polymere mit alternativen Tensiden zu Lutensol TO 15 gefertigt (Messung der Viskosität wie in Anwendungsbsp. 1 beschrieben):

| | Tensid | Viskosität [mPa*s] |
|---|---|---|
| Herstellungsbsp. 3 | 2 % Lutensol TO 15 (C₁₃-Oxoalkoholethoxylat + 15 EO) | 230 |
| Herstellungsbsp. 5 | 2 % Lutensol AP 10 (Alkylphenol + 10 EO) | 390 |
| Herstellungsbsp. 6 | 2 % Lutensol XL100 (C₁₀-Guerbetalkohol+10 EO) | 140 |
| Herstellungsbsp. 7 | 2 % Lutensol XP100 (C₁₀-Guerbetalkohol+10 EO) | 80 |
| Herstellungsbsp. 8 | 2 % Natriumdodecylsulfonat (SDS) | 100 |
| Herstellungsbsp. 9 | 2 % Dodecyltrimethylammoniumchlorid | 150 |
| Herstellungsbsp. 10 | 2 % Lutensol TO 10 (C₁₃-Oxoalkoholethoxylat + 10 EO) | 270 |

Wie an den Daten zu erkennen ist, kann nicht nur das Lutensol TO 15 sondern auch andere nichtionische Tenside, sowie anionische und kationische Tenside bei der Synthese der erfindungsgemäßen Copolymere eingesetzt werden.

### 1.4 Herstellungsbeispiel 11 (erfindungsgemäß)

In Analogie zu dem Herstellungsbeispiel 3 wurde ein Copolymer mit einem alternativen wasserlöslichen, hydrophob assoziierenden Monomer zu Pluriol A1190V+12PeO gefertigt. Dieses Monomer besteht aus einem mit 7 EO ethoxyliertem C₁₂-Alkohol, welcher anschließend mit Methacrylsäureanhydrid umgesetzt wurde (Genagen LA070MA der Firma Clariant). Die eingesetzte Masse des Genagens entspricht derjenigen des Pluriols A1190V+12PeO in Herstellungsbsp. 3. Die Messung der Viskosität wie in Anwendungsbsp. 1 beschrieben ergab einen Wert von 780 mPas. Dieses Herstellungsbeispiel zeigt, dass verschiedene wasserlösliche, hydrophob assoziierende Monomere eingesetzt werden können.

### 1.5 Herstellungsbeispiel 12 (erfindungsgemäß)

In Analogie zu Herstellungsbeispiel 3 wurde ein gemischt ionisches Copolymer gefertigt. Dieses Copolymer enthält zusätzlich zu AMPS^{®}, Acrylamid und Pluriol A1190V+12PeO das kationische Monomer 3-Trimethylammoniumpropylmethacrylamidchlorid (DIMAPAQUAT). Das molare Verhältnis der Monomere beträgt AMPS^{®}:Acrylamid:DIMAPAQUAT:Pluriol A1190V+12PeO = 30:37:32:1. Die Messung der Viskosität, wie in Anwendungsbsp. 1 beschrieben, ergab einen Wert von 56 mPas.

### 1.6 Herstellungsbeispiel 13 (erfindungsgemäß)

In Analogie zu Herstellungsbeispiel 3 wurde ein Copolymer, welches statt 4,6g Pluriol A1190V+ 12PeO die gleiche molare Menge Pluriol A1190V+16PeO (Entwicklungsprodukt der Fa. BASF bestehend aus Hydroxybutylvinylether mit 25 Ethylenoxideinheiten und 16 Pentenoxideinheiten) enthält, gefertigt. Die Messung der Viskosität, wie in Anwendungsbsp. 1 beschrieben, ergab einen Wert von 77 mPas.

### 1.7 Herstellungsbeispiel 14 (erfindungsgemäß)

In Analogie zu Herstellungsbeispiel 3 wurde ein Copolymer, welches statt Na-AMPS^{®} das Natriumsalz der Acrylsäure enthält, gefertigt. Die Massenanteile der Monomere betrugen 28 % Na-Acrylat, 70 % Acrylamid und 2 % Pluriol A1190V+12PeO. Als Tensid wurden 4,8 g Lutensol AP 10 (BASF) zugesetzt. Der Feststoffgehalt des polymerisierten Gels betrug 19,5 %. Die Messung der Viskosität, wie in Anwendungsbsp. 1 beschrieben, ergab einen Wert von 49 mPas.

### 1.8 Herstellungsbeispiel 15 (erfindungsgemäß)

In Analogie zu Herstellungsbeispiel 3 wurde ein Copolymer, in welchem das Na-AMPS^{®} teilweise durch das Natriumsalz der Acrylsäure ersetzt wurde, gefertigt. Die Massenanteile der Monomere betrugen 28 % AMPS^{®}, 20 % Na-Acrylat, 50 % Acrylamid und 2 % Pluriol A1190V+12 PeO. Als Tensid wurden 4,8 g Lutensol TO 15 (BASF) zugesetzt. Die Messung der Viskosität, wie in Anwendungsbsp. 1 beschrieben, ergab einen Wert von 40 mPas.

### 1.9 Herstellungsbeispiel 16 (erfindungsgemäß)

Dieses Beispiel beschreibt ein alternatives Polymerisationsverfahren zu Herstellungsbeispiel 5. In einem Plastikeimer mit Magnetrührer, pH-Meter und Thermometer wurden 121,2 g Na-AMPS^{®} (50 %-ige Lösung) vorgelegt und anschließend nacheinander 155 g destilliertes Wasser, 0,6 g Surfynol, 0,2 g Baysilone, 2,3 g Pluriol A1190V + 12 PeO, 114,4 g Acrylamid (50 %-ige Lösung), 1,2 g Versenex (5 %-ige Lösung) und 2,4 g Lutensol AP10 zugegeben. Nach Einstellen auf pH 6,0 mit einer 20 %-igen bzw. 2 %-igen Schwefelsäure-Lösung und Zugabe des restlichen Wassers (Gesamtwassermenge abzüglich der bereits zugegebenen Wassermenge, abzüglich der benötigten Menge an Säure) wurde die Monomerlösung auf die Starttemperatur von 20 °C eingestellt. Die Lösung wurde in eine Thermoskanne umgefüllt, der Thermofühler für die Temperaturaufzeichnung angebracht und 30 Minuten mit Stickstoff gespült. Zum Ende des Stickstoffspülens wurde die Online-Messung der Temperatur gestartet, die Starttemperatur nochmals kontrolliert bzw. nachgestellt und nacheinander 1,6 ml einer 10 %-igen V50-Lösung, 0,12 ml einer 1 %-igen t-BHPO-Lösung und 0,24 ml einer 1 %-igen Natriumsulfit-Lösung zugesetzt. Als die Monomerlösung zu verdicken begann, wurde die Stickstofffritte aus der Monomerlösung entfernt. Nachdem die Temperatur des Gel-Blocks ihr Maximum erreichte, wurde der Thermofühler entfernt und die Thermoskanne für zwei Stunden bei 80°C in den Trockenschrank gestellt. Danach wurde der Gel-Block aus der Thermoskanne entfernt und mit einer Schere die Oberfläche ca. 0,5 - 1 cm abgeschnitten und verworfen. Der Rest wurde halbiert, mit dem Trennmittel Comperlan COD (Kokosfettsäurediethanolamid) bestrichen und mit Hilfe eines Fleischwolfs zerkleinert. Das erhaltene Gel-Granulat wurde in einen Wirbelschichttrockner bei 55 °C für zwei Stunden getrocknet. Man erhielt dabei ein weißes, hartes Granulat, welches mittels Zentrifugalmühle in einen pulverförmigen Zustand überführt wurde.

### 1.10 Herstellungsbeispiel 17 (erfindungsgemäß)

Analog Herstellungsbeispiel 16, aber unter Einsatz von 6 g Pluriol A1190V + 12 PeO und 6 g Lutensol AP10.

### 2. Eigenschaften des Copolymers

### 2.1 Messung 1

Die Polymere der Herstellungsbeispiele 1 - 4 wurden in synthetischem Meerwasser nach DIN 50900 (Salzgehalt 35 g/l) gelöst, so dass eine Polymerkonzentration von 4000 ppm erreicht wurde. Von diesen Lösungen wurde die Viskosität an einem Haake-Rheometer mit einer Doppelspaltgeometrie bei 7 s⁻¹ und 60 °C gemessen.

| Polymer | Viskosität |
|---|---|
| | [mPa*s] |
| Herstellungsbsp. 1 | 24 |
| Herstellungsbsp. 2 | 360 |
| Herstellungsbsp. 3 | 230 |
| Herstellungsbsp. 4 | 80 |

Man sieht deutlich, dass durch die Zugabe des Lutensol TO 15 während der Polymerisation die Viskosität der Polymere deutlich gesteigert werden kann. Des Weiteren hat die zugegebene Menge an Tensid einen deutlichen Einfluss auf die Viskosität.

### 2.2 Messung 2

Um zu zeigen, dass es sich bei den erfindungsgemäßen Polymeren nicht nur um eine physikalische Mischung aus dem Polymer von Herstellungsbsp. 1 und dem Tensid handelt, sondern dass das die Polymerstruktur während der Polymerisationsreaktion entscheidend beeinflusst wird, wurden auch die Viskositäten von Mischungen des Polymers aus Herstellungsbsp. 1 mit dem Tensid Lutensol TO 15 gemessen:

| | Viskosität [mPas] | Viskosität der Mischung von Herstellungsbsp. 1 mit der entsprechenden Menge an Lutensol TO 15 [mPas] |
|---|---|---|
| Herstellungsbsp. 2 | 360 | 25 |
| Herstellungsbsp. 3 | 230 | 26 |
| Herstellungsbsp. 4 | 80 | 20 |

Wie an diesen Messungen zu erkennen ist, hat eine nachträgliche Zugabe des Tensids keinen positiven Einfluss auf die Viskosität des Polymers.

Zur detaillierteren Untersuchung des Wirkmechanismus wurde das Polymer aus Herstellungsbeispiel 3 über einen Zeitraum von 48 h mit Toluol im Soxhlet refluxiert. Dabei wurden 90% des ursprünglich enthaltenen Lutensol TO 15 aus dem Copolymer extrahiert. Die hohe Viskosität des Polymers blieb aber auch nach der nahezu vollständigen Extraktion des Tensids erhalten.

Dies deutet darauf hin, dass das Tensid nicht kovalent in das Copolymer eingebaut bzw. gepfropft wird, sondern dass der Tensidzusatz den Aufbau der Polymerstruktur positiv beeinflusst. Dies könnte man sich so vorstellen, dass das Tensid mit dem hydrophob assoziierenden Monomer gemischte Mizellen bildet.

### 2.3 Messung 3

1 g des jeweiligen Copolymers der Herstellungsbeispiele 1 - 4 wurde in 249 g synthetischem Meerwasser nach DIN 50900 (Salzgehalt 35 g/l) 24 h lang bis zum vollständigen Lösen gerührt. Anschließend wurde die Lösung über ein Sieb mit der Maschenweite 200 µm filtriert und das Volumen des auf dem Sieb verbleibenden Rückstands gemessen. Der erhaltene Wert entspricht dem Gelanteil.

| Polymer | Gelanteil [ml] |
|---|---|
| Herstellungsbsp. 1 (Vergleich) | 45 |
| Herstellungsbsp. 2 (Erfindung) | 9 |
| Herstellungsbsp. 3 (Erfindung) | 5 |
| Herstellungsbsp. 4 (Erfindung) | < 1 |

Wie an den Daten zu erkennen ist, verringert sich der Gelanteil durch die Tensidzugabe deutlich. Mit steigender Tensidmenge lässt sich der Gelanteil bis unter die Nachweisgrenze reduzieren.

### 2.4 Anwendungsbeispiel 1 (erfindungsgemäß)

Die folgende Grafik zeigt den Verlauf der Viskosität einer wässrigen Lösung von Herstellungsbeispiel 16 (c = 1200 ppm in 9 %-iger Salzlösung, gemessen bei 6 rpm (Upm) mit Brookfield LV und UL-Adapter). Bei einem Temperaturanstieg von 20 auf 30°C ist zunächst ein geringer Viskositätsabfall zu beobachten, anschließend steigt die Viskosität deutlich an und durchschreitet im Bereich von 50-60 °C ein Maximum, um dann bei weiter steigender Temperatur kontinuierlich abzunehmen.

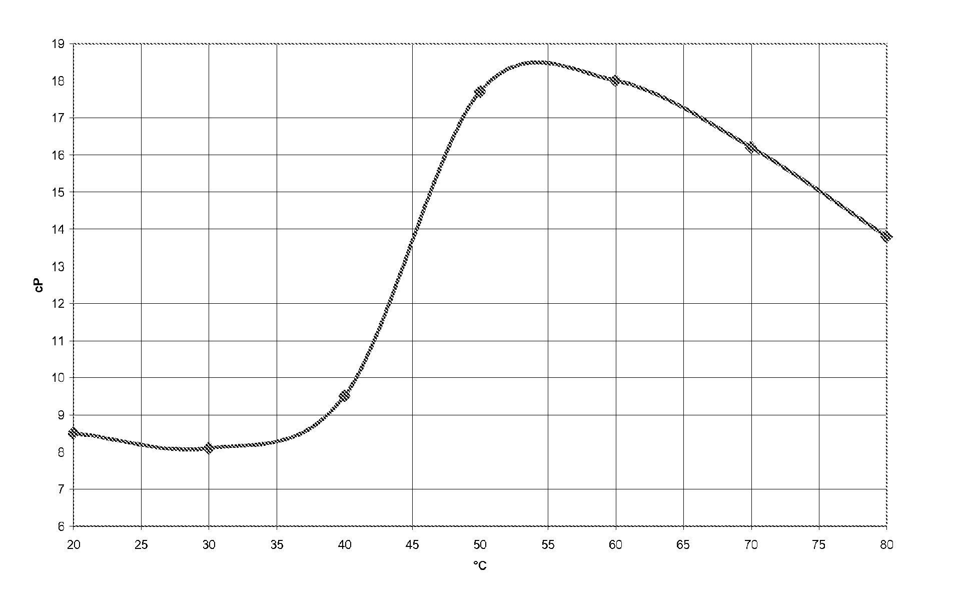

### 3. Anwendung als Verdicker im "Hydraulic Fracturing"

### 3.1 Anwendungsbeispiel 2 (Vergleich)

In der nachfolgenden Tabelle sind die rheologischen Eigenschaften einer 0,6 %-igen Lösung von Hydroxypropylguar (Jaguar^{®} HP-8, Fa. Rhodia) bei unterschiedlichen Temperaturen und Drehzahlen dargestellt (gemessen mit Fann 35).

| Solvens | Temperatur [°F] | Fann-35-Werte [lb/100 sqf] bei ... rpm | | | | | |
|---|---|---|---|---|---|---|---|
| | | 300 | 200 | 100 | 6 | 3 | 600 |
| Leitungswasser | 80 | 51 | 44 | 34 | 11 | 8 | 65 |
| | 140 | 42 | 35 | 27 | 8 | 4 | 50 |
| | 190 | 33 | 29 | 21 | 4 | 2 | 43 |
| Meerwasser | 80 | 50 | 42 | 33 | 10 | 8 | 64 |
| | 140 | 38 | 32 | 24 | 6 | 3 | 48 |
| | 190 | 27 | 21 | 14 | 2 | 0 | 35 |

### 3.2 Anwendungsbeispiel 3 (Vergleich)

In der nachfolgenden Tabelle sind die rheologischen Eigenschaften einer 0,6 %-igen Lösung von Hydroxypropylguar (Galctasol^{®} 40H4FDS1, Fa. Ashland Aqualon) bei unterschiedlichen Temperaturen und Drehzahlen dargestellt (gemessen mit Fann 35).

| Solvens | Temperatur [°F] | Fann-35-Werte [lb/100 sqf] bei ... rpm | | | | | |
|---|---|---|---|---|---|---|---|
| | | 300 | 200 | 100 | 6 | 3 | 600 |
| Leitungswasser | 80 | 39 | 32 | 24 | 6 | 4 | 51 |
| | 140 | 29 | 24 | 18 | 3 | 2 | 38 |
| | 190 | 24 | 19 | 14 | 2 | 1 | 32 |
| Meerwasser | 80 | 44 | 37 | 28 | 6 | 3 | 60 |
| | 140 | 36 | 30 | 22 | 4 | 2 | 47 |
| | 190 | 29 | 24 | 18 | 3 | 2 | 37 |

### 3.3 Anwendungsbeispiel 4 (Vergleich)

In der nachfolgenden Tabelle sind die rheologischen Eigenschaften einer 0,6%igen Lösung von Carboxymethylhydroxypropylguar (Galctasol^{®} 60H3FDS, Fa. Ashland Aqualon) bei unterschiedlichen Temperaturen und Drehzahlen dargestellt (gemessen mit Fann 35).

| Solvens | Temperatur [°F] | Fann-35-Werte [lb/100 sqf] bei ... rpm | | | | | |
|---|---|---|---|---|---|---|---|
| | | 300 | 200 | 100 | 6 | 3 | 600 |
| Leitungswasser | 80 | 44 | 37 | 29 | 9 | 6 | 56 |
| | 140 | 39 | 33 | 25 | 5 | 3 | 47 |
| | 190 | 28 | 24 | 17 | 3 | 2 | 36 |
| Meerwasser | 80 | 54 | 47 | 37 | 12 | 8 | 69 |
| | 140 | 41 | 36 | 28 | 8 | 4 | 51 |
| | 190 | 33 | 28 | 21 | 3 | 2 | 41 |

### 3.4 Anwendungsbeispiel 5 (erfindungsgemäß)

In der nachfolgenden Tabelle sind die rheologischen Eigenschaften einer 0,6 %-igen Lösung von Herstellungsbeispiel 16 bei unterschiedlichen Temperaturen und Drehzahlen dargestellt (gemessen mit Fann 35).

| Solvens | Temperatur [°F] | Fann-35-Werte [lb/100 sqf] bei ... rpm | | | | | |
|---|---|---|---|---|---|---|---|
| | | 300 | 200 | 100 | 6 | 3 | 600 |
| Leitungswasser | 80 | 71 | 67 | 50 | 17 | 12 | 108 |
| | 140 | 73 | 60 | 45 | 17 | 13 | 91 |
| | 190 | 70 | 56 | 41 | 18 | 14 | 78 |
| Meerwasser | 80 | 35 | 27 | 17 | 3 | 2 | 49 |
| | 140 | 40 | 33 | 26 | 10 | 8 | 47 |
| | 190 | 37 | 27 | 17 | 7 | 5 | 41 |

### 3.5 Anwendungsbeispiel 6 (erfindungsgemäß)

In der nachfolgenden Tabelle sind die rheologischen Eigenschaften einer 0,6 %-igen Lösung von Herstellungsbeispiel 2 bei unterschiedlichen Temperaturen dargestellt (gemessen mit Fann 35).

| Solvens | Temperatur [°F] | Fann-35-Werte [lb/100 sqf] bei ... rpm | | | | | |
|---|---|---|---|---|---|---|---|
| | | 300 | 200 | 100 | 6 | 3 | 600 |
| Leitungswasser | 80 | 95 | 72 | 50 | 20 | 13 | 119 |
| | 140 | 70 | 65 | 51 | 20 | 17 | 85 |
| | 190 | 79 | 66 | 53 | 27 | 24 | 92 |
| Meerwasser | 80 | 35 | 28 | 18 | 4 | 3 | 51 |
| | 140 | 65 | 56 | 48 | 20 | 14 | 64 |
| | 190 | 45 | 32 | 28 | 11 | 9 | 55 |

Zur Veranschaulichung der obigen Daten wurden die bei 300 Upm und 3 Upm in Leitungswasser gemessenen Werte in den folgenden Grafiken zusammengefasst:

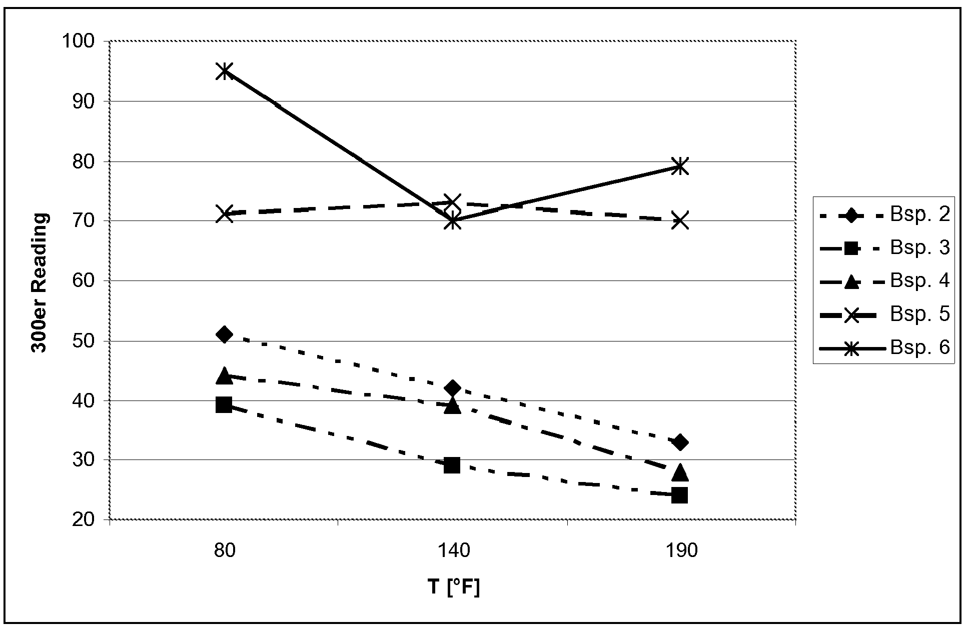

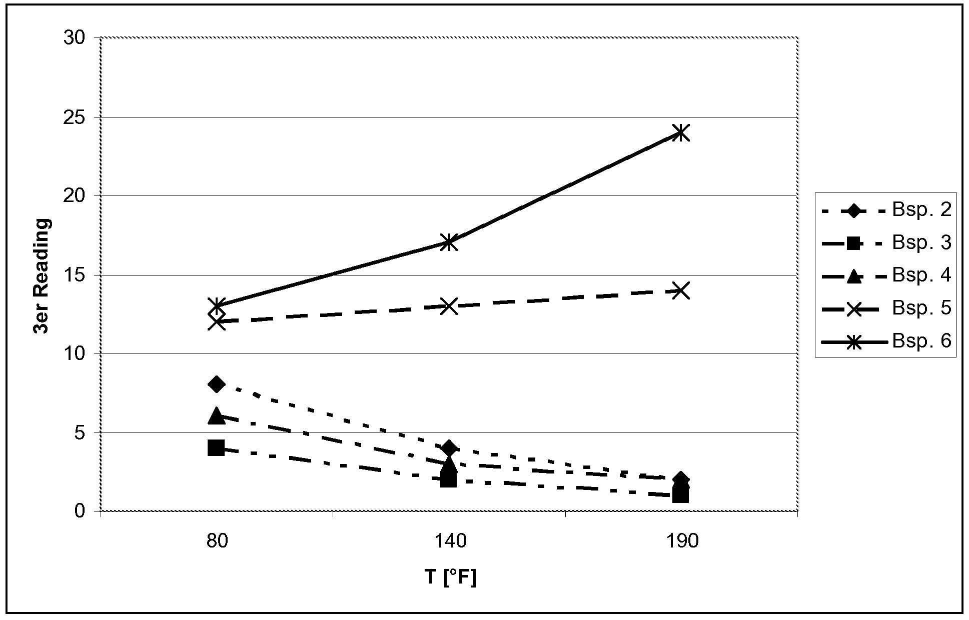

Wie an den Graphiken zu erkennen ist, sind einerseits die Viskositätswerte der erfindungsgemäßen Copolymere bei Raumtemperatur höher als diejenigen der bisher eingesetzten, kommerziellen Polymere, andererseits ist bei steigender Temperatur kein wesentlicher Abfall der Viskosität zu beobachten, man kann sogar bei den niedrigen Scherraten ein Anstieg beobachten.

Die vergleichsweise hohen Viskositätswerte bei den niedrigen Scherraten sind für die Anwendung als Verdicker im "Hydraulic Fracturing" besonders vorteilhaft, da bei dieser Anwendung in der Regel Stützkörper zusammen mit der Polymerlösung verpumpt werden. So wird ein Absetzen dieser Stützkörper verhindert.

### 4. Anwendung als Verdicker bzw. Stabilisator für Schäume

### 4.1 Anwendungsbeispiel 7 (erfindungsgemäß)

350 g Leitungswasser wurden in ein Becherglas eingewogen. 1 g des Polymers aus Herstellungsbeispiel 17 wurde unter Rühren zugegeben, es wurde 30 min bei 400 Upm gerührt, danach auf ca. 200 Upm zurückgeschaltet und über Nacht rühren gelassen. 300 g dieser Mischung wurden in den Glasbecher eines Waring-Blenders gegeben. 0,125 % (0,38 g) Schäumer (Lutensol GD 70, Alkylpolyglucosid, Fa. BASF) wurden zugegeben und 15 sec im Waring Blender bei 12000 Upm gerührt. 60 g dieses Schaums wurden in eine Plastikflasche abgewogen und mit Leitungswasser auf insgesamt 300 g aufgefüllt (20 %-ige Verdünnung). Diese Mischung wurde dann am SITA Schaumtester vermessen.

### 4.2 Anwendungsbeispiel 8 (Vergleich)

350 g Leitungswasser wurden eingewogen und 3,5 g Jaguar^{®} HP 8 (Hydroxypropylguar, Fa. Rhodia) unter Rühren am Hamilton-Beach-Mixer zugegeben. Anschlißend wurde 20 min bei der Einstellung "Low Speed" gerührt. 300 g dieser Mischung wurden in den Glasbecher eines Waring Blenders gegeben, zusätzlich wurden 0,125 % (0,38g) Schäumer (Lutensol GD 70, Alkylpolyglucosid, Fa. BASF) zugegeben und 15 sec am Waring Blender bei 12000 Umdrehungen gerührt. 60 g dieses Schaums wurden in eine Plastikflasche abgewogen und auf 300 g mit Leitungswasser aufgefüllt (20 %-ige Verdünnung). Diese Mischung wurde dann ebenfalls am SITA Schaumtester vermessen. Die Messparameter der Anwendungsbeispiele 7 und 8 sind in der nachfolgenden Tabelle, die Ergebnisse in den nachfolgenden graphischen Darstellungen wiedergegeben.

SITA Schaumtester - Meßparameter

| Parameter: | | | |
|---|---|---|---|
| V (Sample): | 250 ml | | |
| N (Rotor): | 2000 R/min | T (Sample): | 20,0 °C ±0,5 K |
| t (Stir): | 15 s | Cleaning: | short |

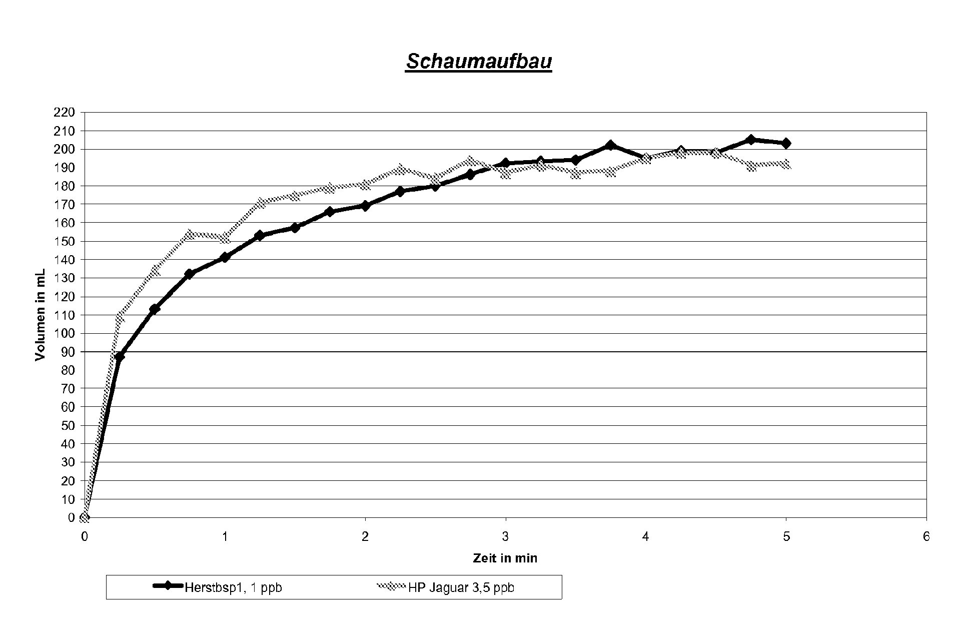

Um einen gleich guten Schaumaufbau zu erreichen wie mit dem kommerziellen Verdicker Jaguar^{®} HP 8, braucht man statt 3,5 ppb ("Pounds per Barrel") nur 1 ppb des erfindungsgemäßen Copolymers.

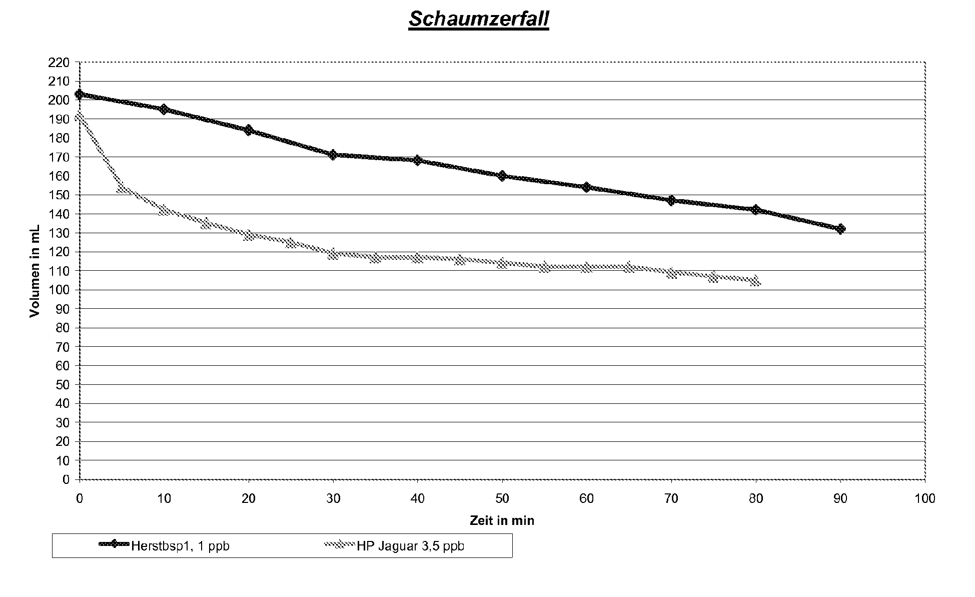

Der Schaumzerfall bei Anwendung des erfindungsgemäßen Copolymers ist viel langsamer und homogener als beim kommerziellen Verdicker Jaguar^{®} HP.

### 5. Verdicker für Bohrspülungen

Die Durchführung der Versuche erfolgt nach API RP 131 "Recommended Practice for Laboratory Testing of Drilling Fluids".

### 5.1 Anwendungsbeispiel 9:

350 ml destilliertes Wasser wurden in ein 600 ml Becherglas gefüllt. Ein Rührer mit Rührwelle wurde in den KPG-Rührer eingespannt und in das Becherglas eingetaucht. Der Rührer wurde auf 300 Upm eingestellt und das Polymer wurde langsam zugegeben. Der Rührer wurde nach ca. 30 min auf 200 Upm gedrosselt; es wurde weitere 17 Stunden gerührt. Anschließend wurden die Rheologie und der pH-Wert der Lösung gemessen.

Danach wurde die Lösung in eine Alterungszelle gefüllt. Die Zelle wurde begast und im Rollenofen 16 Stunden gealtert (Temp.: 250 °F, Druck: 250 psi). Nach der Alterung wurde wieder die Rheologie gemessen. Die Ergebnisse sind in der folgenden Tabelle wiedergegeben.

| Polymer | ppb | Fann-35 vor Alterung 600-300-200-100-6-3 | PV | YP | Fann-35 nach Alterung 600-300-200-100-6-3 | PV | YP |
|---|---|---|---|---|---|---|---|
| Herstell. Bsp. 16 | 1,0 | 43-30-28-20-7-6 | 13 | 17 | 34-25-23-17-5-4 | 9 | 16 |
| | 1,5 | 68-58-41-31-13-10 | 10 | 48 | 49-37-31-24-7-5 | 12 | 25 |
| Herstell. Bsp. 17 | 1,0 | 72-53-44-34-14-11 | 19 | 34 | 40-29-25-18-5-4 | 11 | 18 |
| | 1,5 | 114-86-73-57-24-20 | 28 | 58 | 66-48-40-30-9-6 | 18 | 30 |
| 8 Teile | 1,5 | 80-57-48-37-15-12 | 23 | 34 | 50-38-33-25-8-6 | 12 | 26 |
| Herstell. Bsp. 16 | | | | | | | |
| 2 Teile | | | | | | | |
| Herstell. Bsp. 17 | | | | | | | |
| Biovis^{®} | 1,0 | 17-13-12-9-5-4 | 4 | 9 | 10-6-4-3-1-1 | 4 | 2 |
| | 1,5 | 23-18-15-12-7-6 | 5 | 13 | 21-14-12-9-4-4 | 8 | 6 |
| Xanthan | 1,0 | 16-12-10-8-4-4 | 4 | 8 | 4-2-1-0-0-0 | 2 | 0 |
| | 1,5 | 23-18-16-13-7-6 | 5 | 13 | 4-3-1-0-0-0 | 1 | 2 |

Die erfindungsgemäßen Polymere weisen gegenüber Biovis^{®} (Scleroglucan, Fa. BASF) und besonders gegenüber Xanthan (Bioflow^{®}, Fa. BASF), insbesondere nach Alterung, bei gleicher Dosierung eine höhere Viskosität auf. Interessant ist auch, dass mit einer Mischung der beiden erfindungsgemäßen Polymere ein flachere Rheologie zu erreichen ist.

### 6. Anwendung in Komplettierungsflüssigkeiten

### 6.1 Anwendungsbeispiel 10

Das erfindungsgemäße Polymer aus Herstellunsgbeispiel 16 wurde in 4 verschiedenen, hochdichten Salzlösungen ("Brines"), die als feststofffreie Komplettierungsflüssigkeiten eingesetzt werden, getestet:
Brine 1:
   56 Gew.-% Leitungswasser
   24 Gew.-% CaBr₂
   20 Gew.-% CaCl₂
   Dichte: 1,456 g/ml
Brine 2:
   40,2 Gew.-% Leitungswasser
   59,8 Gew.-% CaBr₂
   Dichte: 1,774 g/ml
Brine 3:
   58 Gew.-% Leitungswasser
   42 Gew.-% CaCl₂
   Dichte: 1,351 g/ml
Brine 4:
   59,4 Gew.-% Leitungswasser
   40,6 Gew.-% Natriumformiat
   Dichte: 1,257 g/ml

Die erfindungsgemäßen Polymere wurden als 1,75 %-ige Polymerlösung zu den jeweiligen Brines gegeben und die Viskosität der resultierenden Komplettierungsflüssigkeit mit dem Fann-35 bei Raumtemperatur bestimmt. Die Alterung der Komplettierungsflüssigkeiten erfolgte dynamisch in einem Rollenofen bei den jeweils angegebenen Temperaturen für 16 Stunden. Anschließend wurde die Flüssigkeit auf RT abgekühlt und wieder mit dem Fann-35 bestimmt.

Zur Herstellung der 1,75 %-igen Polymerlösung (1,75 g Polymer + 98,25 g Wasser) wurde Wasser in einem HBM-Becher am IKA-Rührer vorgelegt, das Polymer wurde zugegeben und 1 h bei 1100 Upm gerührt. Zur Herstellung der Komplettierungslösungen wurden 200 g einer 1,75 %-igen Polymerlösung und 200 g Brine in einem HBM-Becher eingewogen und 30 min bei 1100 Upm gerührt. Die Dichte wurde bestimmt und die Rheologie wurde gemessen. Man ließ bei der jeweiligen Temperatur 16 h lang im Rollenofen altern und anschließend die Alterungszelle im Wasserbad abkühlen. Das Gemisch wurde kurz mit einem Spatel gerührt und die Rheologie wurde erneut bei Raumtemperatur gemessen. Die Ergebnisse sind in den nachfolgenden graphischen Darstellungen angegeben.

Na-Formiat-Brine mit einer Dichte von 1,11 g/ml

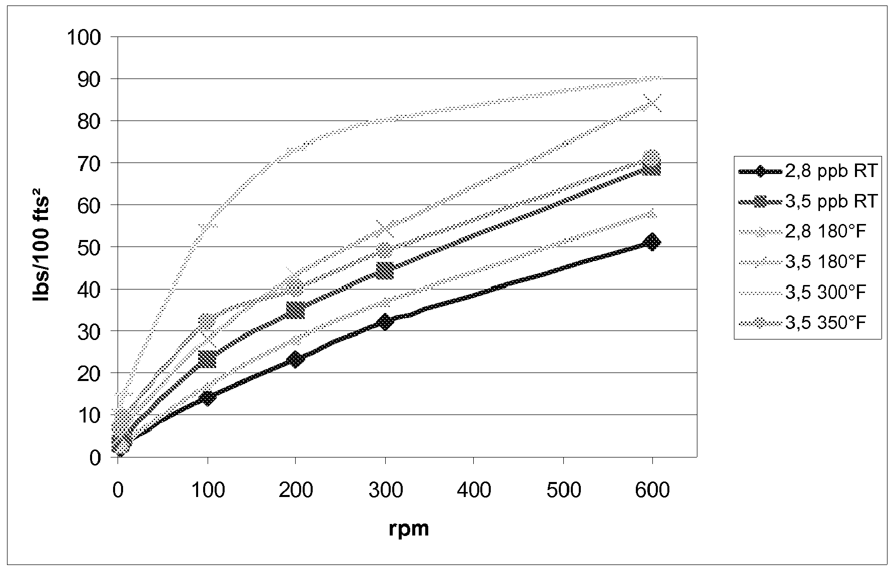

CaCl₂/CaBr₂-Brine mit einer Dichte von 1,19 g/ml

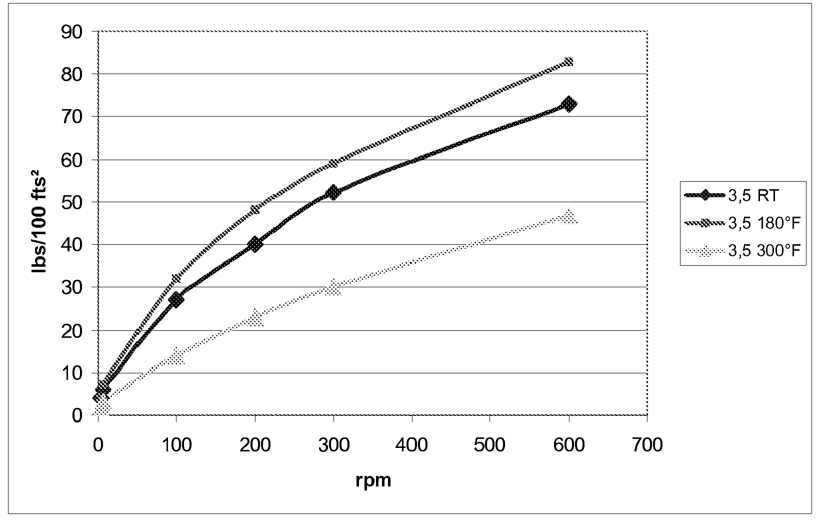

CaBr2-Brine mit einer Dichte von1,16 g/ml

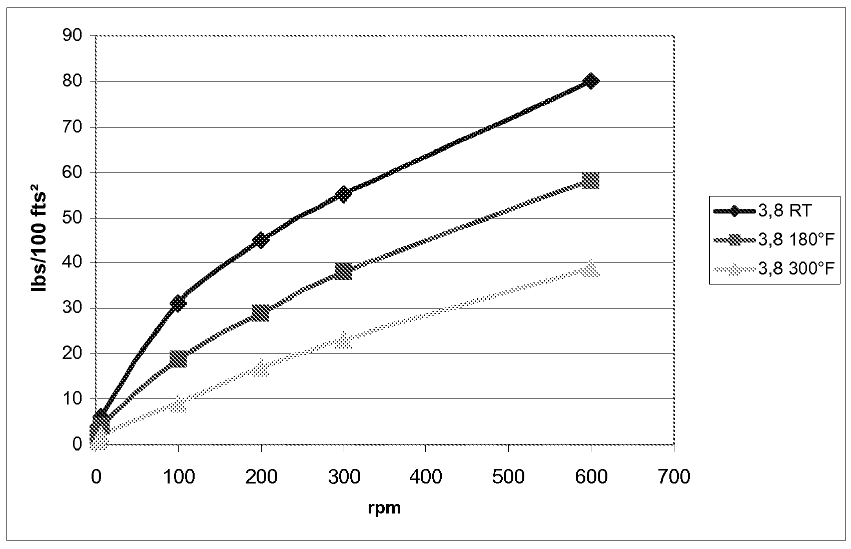

Die graphischen Darstellungen zeigen deutlich, dass das erfindungsgemäße Copolymer als verdickend wirkendes, rheologisches Additiv für Komplettierungsflüssigkeiten verwendet werden kann.

## Patentansprüche

1. Verwendung eines wasserlöslichen, hydrophob assoziierenden Copolymers als Additiv bei der Erschließung, Ausbeutung und Komplettierung unterirdischer Erdöl-und Erdgaslagerstätten, umfassend
(a) mindestens ein monoethylenisch ungesättigtes, wasserlösliches, oberflächenaktives Monomer (a), sowie
(b) mindestens ein von Monomer (a) verschiedenes, monoethylenisch ungesättigtes, hydrophiles Monomer (b),
**dadurch gekennzeichnet, dass** bei der Synthese des Copolymers vor der Initiierung der Polymerisationsreaktion als weitere Komponente (c) mindestens eine weitere, aber nicht-polymerisierbare oberflächenaktive Verbindung eingesetzt wurde.

2. Verwendung nach Anspruch 1, **dadurch gekennzeichnet, dass** es sich bei dem Monomer (a) um mindestens eine Verbindung der allgemeinen Formel
H₂C=C(R¹)-R⁴-O-(-CH₂-CH₂-O-)ₖ-(-CH₂-CH(R³)-O-)ₗ-R⁵ (I),
H₂C=C(R¹)-O-(-CH₂-CH₂-O-)ₖ-R² (II)
und/oder
H₂C=C(R¹)-(C=O)-O-(-CH₂-CH₂-O-)ₖ-R² (III)
handelt, wobei die Einheiten -(-CH₂-CH₂-O-)ₖ und -(-CH₂-CH(R³)-O-)ₗ in Blockstruktur in der in Formel (I) dargestellten Reihenfolge angeordnet sind und die Reste und Indices die folgende Bedeutung haben:
k: eine Zahl von 6 bis 150,
l: eine Zahl von 5 bis 25,
R¹: H oder Methyl,
R²: ein aliphatischer und/oder aromatischer, geradkettiger oder verzweigter Kohlenwasserstoffrest mit 8 bis 40 Kohlenstoffatomen,
R³: unabhängig voneinander ein Kohlenwasserstoffrest mit mindestens 2 Kohlenstoffatomen,
R⁴: eine Einfachbindung oder eine zweiwertige, verknüpfende Gruppe, ausgewählt aus der Gruppe von -(CₙH₂ₙ)- [R^{4a}], -O-(C_{n'}H_{2n'})- [R^{4b}] und -C(O)-O-(C_{n"}H_{2n"})- [R^{4c}], wobei n, n' und n" jeweils für eine natürliche Zahl von 1 bis 6 steht,
R⁵: H oder ein C₁₋₃₀-Kohlenwasserstoffrest, vorzugsweise H oder ein C₁₋₅-Alkylrest und insbesondere H.

3. Verwendung nach Anspruch 1 oder 2 als verdickend wirkendes, rheologisches Additiv für das Hydraulic Fracturing.

4. Verwendung nach Anspruch 1 oder 2 als verdickend wirkendes, rheologisches Additiv für Komplettierungsflüssigkeiten.

5. Verwendung nach Anspruch 1 oder 2 als verdickend wirkendes, rheologisches Additiv für Abstandshalterflüssigkeiten.

6. Verwendung nach Anspruch 1 oder 2 als verdickend wirkendes, rheologisches Additiv für Bohrspülungsflüssigkeiten.

7. Verwendung nach Anspruch 1 oder 2 als verdickend wirkendes, rheologisches Additiv und/oder Stabilisator für Schäume.

8. Verwendung nach einem der Ansprüche 1 bis 7, **dadurch gekennzeichnet, dass** sie bei einer Temperatur im Bereich von 40 °C bis 120 °C, vorzugsweise von 50 °C bis 100 °C, erfolgt.

9. Verwendung nach einem der Ansprüche 1 bis 8, **dadurch gekennzeichnet, dass** die Komponente (c) nichtionische Tenside umfasst.

10. Verwendung nach einem der Ansprüche 1 bis 9, **dadurch gekennzeichnet, dass** die Monomer-Komponente (a) in Mengen von 0,1 bis 20,0 Gew.-% und bevorzugt 0,1 bis 5 Gew.-%, die Monomer-Komponente (b) in Mengen von 50,0 bis 99,9 Gew.-% und die Komponente (c) in Mengen von 0,1 bis 10,0 Gew.-%, jeweils bezogen auf die Gesamtmenge aller Komponenten im Copolymer, vorhanden sind.

11. Verwendung nach einem der Ansprüche 1 bis 10, **dadurch gekennzeichnet, dass** es sich bei R³ um einen Kohlenwasserstoffrest mit mindestens 3 Kohlenstoffatomen handelt.

12. Verwendung nach einem der Ansprüche 1 bis 11, **dadurch gekennzeichnet, dass** es sich bei R¹ um H und bei R⁴ um eine Gruppe, ausgewählt aus -CH₂-und -O-CH₂-CH₂-CH₂-CH₂-, handelt.

13. Verwendung nach einem der Ansprüche 1 bis 12, **dadurch gekennzeichnet, dass** es sich bei mindestens einem der Monomere (b) um ein saure Gruppen umfassendes Monomer und/oder dessen Salze handelt.

14. Verwendung nach Anspruch 13, **dadurch gekennzeichnet, dass** es sich bei den sauren Gruppen um mindestens eine Gruppe, ausgewählt aus -COOH, -SO₃H und
- PO₃H₂ sowie deren Salzen, handelt.

15. Verwendung nach einem der Ansprüche 1 bis 14, **dadurch gekennzeichnet, dass** es sich bei dem Copolymer um ein Copolymer (A1) handelt, welches mindestens zwei verschiedene hydrophile Monomere (b) umfasst, und es sich dabei um mindestens
• ein neutrales hydrophiles Monomer (b1), vorzugsweise Acrylamid, und
• mindestens ein hydrophiles anionisches Monomer (b2) handelt, welches mindestens eine saure Gruppe, ausgewählt aus -COOH, -SO₃H oder -PO₃H₂ sowie deren Salzen, umfasst,
wobei die Menge der Monomere (a) 0,1 bis 20 Gew.-% und die aller Monomere (b) zusammen 70 bis 99,5 Gew.-%, bezogen auf die Menge aller Monomere im Copolymer, beträgt.

16. Verwendung nach Anspruch 15, **dadurch gekennzeichnet, dass** es sich bei dem neutralen Monomer (b1) um ein Monomer, ausgewählt aus der Gruppe (Meth)-acrylamid, *N*-Methyl(meth)acrylamid, *N,N*-Dimethyl(meth)acrylamid, *N-*Methylol(meth)acrylamid, *N*-Vinylformamid und *N*-Vinyl-2-pyrrolidon, handelt, und bei dem Monomer (b2) um mindestens ein Monomer, ausgewählt aus der Gruppe (Meth)acrylsäure, Vinylsulfonsäure, Allylsulfonsäure, 2-Acrylamido-2-methylpropansulfonsäure, 2-Methacrylamido-2-methylpropansulfonsäure, 2-Acrylamidobutansulfonsäure, 3-Acrylamido-3-methyl-butansulfonsäure, 2-Acrylamido-2,4,4-trimethylpentansulfonsäure und Vinylphosphonsäure.

17. Verwendung nach einem der Ansprüche 15 oder 16, **dadurch gekennzeichnet, dass** das Copolymer darüber hinaus noch mindestens ein kationisches, Ammoniumgruppen aufweisendes Monomer (b3) umfasst.

18. Verwendung nach Anspruch 17, **dadurch gekennzeichnet dass** es sich bei dem kationischen Monomer um Salze von 3-Trimethylammoniumpropyl(meth)-acrylamiden und/oder 2-Trimethylammoniumethyl(meth)acrylaten handelt.

19. Verwendung nach einem der Ansprüche 1 bis 12, **dadurch gekennzeichnet, dass** es sich bei dem Copolymer um ein Copolymer (A2) handelt, welches mindestens zwei verschiedene hydrophile Monomere (b) umfasst, und es sich dabei um mindestens
• ein neutrales hydrophiles Monomer (b1), und
• mindestens ein kationisches Monomer (b3) handelt,
wobei die Menge der Monomere (a) 0,1 bis 20 Gew.-% und die aller Monomere (b) zusammen 70 bis 99,9 Gew.-%, bezogen auf die Menge aller Monomere im Copolymer, beträgt.

20. Verwendung nach einem der Ansprüche 1 bis 14, **dadurch gekennzeichnet, dass** es sich bei dem Copolymer um ein Copolymer (A3) handelt, welches mindestens zwei verschiedene hydrophile Monomere (b) umfasst, und es sich dabei um mindestens
• 5 bis 50 Gew.-% mindestens eines neutralen hydrophilen Monomers (b1), und
• 25 bis 94,9 Gew.-% mindestens eines Sulfonsäuregruppen umfassenden, anionischen Monomers (b2) handelt,
wobei die Menge der Monomere (a) 0,1 bis 20 Gew.-%, und die aller Monomere (b) zusammen 70 bis 99,9 Gew.-%, bezogen auf die Menge aller Monomere im Copolymer, beträgt.

21. Verwendung nach einem der Ansprüche 1 bis 20, **dadurch gekennzeichnet, dass** das Copolymer noch bis zu 1 Gew. % eines vernetzenden, mindestens zwei ethylenisch ungesättigte Gruppen umfassenden Monomers (d) umfasst, wobei es sich bei Monomer (d) um mindestens ein Monomer, ausgewählt aus der Gruppe Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat, handelt.
